# EUROPEAN PATENT APPLICATION

(11) **EP 4 722 886 A1**
(43) Date of publication of application: **08.04.2026**
(21) Application number: 25171928.2
(22) Date of filing: 23.04.2025
(51) Int. Cl.: G06F 3/06

(54) **METHOD OF OPERATING STORAGE SYSTEM FOR DYNAMIC POWER CONTROL AND STORAGE SYSTEM PERFORMING THE SAME**

(30) Priority: 07.10.2024 KR 20240135513
(71) Applicant: Samsung Electronics Co., Ltd., Suwon-si, Gyeonggi-do 16677 (KR)
(72) Inventor: LEE, Wonchul, 16677 Suwon-si, Gyeonggi-do (KR)
(74) Representative: Kuhnen & Wacker Patent- und Rechtsanwaltsbüro PartG mbB

(57) **Abstract**

In a method of operating a storage system, a plurality of storage devices enter a first power state in which respective power consumptions of a plurality of storage devices are less than a reference power consumption. The plurality of storage devices output a plurality of operating state signals representing operating states of the plurality of storage devices. When a power consumption increasing event occurs on at least one of the plurality of storage devices and when at least one of the plurality of operating state signals is changed, at least one of the plurality of storage devices receives a power state setting signal. Based on the power state setting signal, the first power state of at least one of the storage devices is changed such that the respective power consumptions of at least one of the plurality of storage devices is greater than or equal to the reference power consumption.

## Description

### BACKGROUND

Example embodiments relate generally to semiconductor integrated circuits, and more particularly to methods of operating storage systems for dynamic power control, and storage systems performing the methods.

Certain types of data storage devices include one or more semiconductor memory devices. Examples of such data storage devices include solid state drives (SSDs). These types of data storage devices may have various design and/or performance advantages over hard disk drives (HDDs). Examples of potential advantages include the absence of moving mechanical parts, higher data access speeds, stability, durability, and/or low power consumption. Recently, various systems, such as laptop computers, cars, airplanes, drones, etc., have adopted the SSDs for data storage.

Storage devices including a storage controller, a volatile memory and nonvolatile memories typically operate by receiving externally-supplied power. As the number of storage devices included in a single system increases, the power consumed by the storage devices in the entire system may increase. Various research has been conducted to reduce the power consumption of the storage devices.

### SUMMARY

At least one example embodiment of the present disclosure provides a method of operating a storage system capable of dynamically controlling and/or adjusting power consumption of the storage system depending on operating states of storage devices.

At least one example embodiment of the present disclosure provides a storage system performing the method of operating the storage system.

According to example embodiments, in a method of operating a storage system including a plurality of storage devices, a first power state in which respective power consumptions of the plurality of storage devices are less than a reference power consumption is entered by the plurality of storage devices. A plurality of operating state signals representing operating states of the plurality of storage devices are output by the plurality of storage devices. When a power consumption increasing event occurs on at least one of the plurality of storage devices and when at least one of the plurality of operating state signals is changed, a power state setting signal is received by at least one of the plurality of storage devices. Based on the power state setting signal, the first power state of at least one of the plurality of storage devices is changed such that the respective power consumptions of at least one of the plurality of storage devices is greater than or equal to the reference power consumption.

According to example embodiments, a storage system includes a plurality of storage devices and a host device that controls operations of the plurality of storage devices. The plurality of storage devices enter a first power state in which respective power consumptions of the plurality of storage devices are less than a reference power consumption. The plurality of storage devices output a plurality of operating state signals representing operating states of the plurality of storage devices. When a power consumption increasing event occurs on at least one of the plurality of storage devices and when at least one of the plurality of operating state signals is changed, at least one of the plurality of storage devices receives a power state setting signal. Based on the power state setting signal, the first power state of at least one of the plurality of storage devices is changed such that the respective power consumptions of at least one of the plurality of storage devices is greater than or equal to the reference power consumption.

According to example embodiments, in a method of operating a storage system including a host device and a plurality of storage devices, a first power state in which respective power consumptions of the plurality of storage devices is less than a reference power consumption is entered by the plurality of storage devices. A plurality of operating state signals are transmitted, by the plurality of storage devices, to the host device. Operating states of the plurality of storage devices are monitored, by the host device, based on the plurality of operating state signals. When a power consumption increasing event occurs on a first storage device among the plurality of storage devices and when a first operating state signal among the plurality of operating state signals is changed, a first power state setting signal having a first value is transmitted, by the host device, to the first storage device based on power budget of the storage system. Based on the first power state setting signal having the first value, a second power state in which a first power consumption of the first storage device is greater than or equal to the reference power consumption is entered by the first storage device. When the power consumption increasing event of the first storage device is completed and when the first operating state signal is changed again, the first power state setting signal having a second value is transmitted, by the host device, to the first storage device. The second value is different from the first value. Based on the first power state setting signal having the second value, the first power state is entered, by the first storage device, again. The power consumption increasing event includes a plurality of internal events that are internally performed in the plurality of storage devices, and a plurality of external events that are performed including an operation of outputting respective signals from the plurality of storage devices to an external device.

In the method of operating the storage system and the storage system according to example embodiments, the operating state of each storage device may be monitored when the plurality of storage devices enter the low power state and the respective power consumptions of the plurality of storage devices is limited, and the power state of a specific storage device may be dynamically and/or adaptively changed to perform a specific event when the specific event occurs on the specific storage device. For example, the power state of each storage device may be selectively changed based on the priorities of events, the power budget of the storage system, etc. In addition, each storage device may not include the auxiliary power supply device and may receive auxiliary power from the auxiliary power supply device located outside each storage device, and the power state of each storage device may be changed immediately in the SPO situation. Accordingly, the power consumption of the storage system may be reduced while the operating performance of the storage system is improved or enhanced.

### BRIEF DESCRIPTION OF THE DRAWINGS

Illustrative, non-limiting example embodiments will be more clearly understood from the following detailed description taken in conjunction with the accompanying drawings.
FIG. 1 is a flowchart illustrating a method of operating a storage system according to example embodiments.
FIG. 2 is a block diagram illustrating a storage system according to example embodiments.
FIG. 3 is a diagram illustrating an example of a power state of a storage device included in a storage system according to example embodiments.
FIG. 4 is a block diagram illustrating an example of a storage device included in a storage system according to example embodiments.
FIG. 5 is a block diagram illustrating an example of a storage controller included in a storage device of FIG. 4.
FIG. 6 is a block diagram illustrating an example of a nonvolatile memory included in a storage device of FIG. 4.
FIG. 7 is a flowchart illustrating an example of outputting a plurality of operating state signals, an example of receiving a power state setting signal and an example of changing a first power state in FIG. 1.
FIG. 8 is a flowchart illustrating an example of operations of FIG. 7.
FIGS. 9A, 9B, 9C, 9D and 9E are diagrams for describing operations of FIG. 8.
FIG. 10 is a flowchart illustrating an example of operations of FIG. 7.
FIGS. 11A and 11B are diagrams for describing operations of FIG. 10.
FIG. 12 is a flowchart illustrating an example of outputting a plurality of operating state signals, an example of receiving a power state setting signal, and an example of changing a first power state in FIG. 1.
FIGS. 13A and 13B are diagrams for describing an example of entering a first power state again in FIG. 12.
FIG. 14 is a flowchart illustrating an example of outputting a plurality of operating state signals, an example of receiving a power state setting signal, and an example of changing a first power state in FIG. 1.
FIG. 15 is a flowchart illustrating an example of operations of FIG. 14.
FIGS. 16A and 16B are diagrams for describing operations of FIG. 15.
FIG. 17 is a flowchart illustrating an example of outputting a plurality of operating state signals, an example of receiving a power state setting signal, and an example of changing a first power state in FIG. 1.
FIGS. 18A, 18B, 18C, 18D, 18E, 18F, 18G, 18H, 18I, 18J, 18K and 18L are diagrams for describing operations of FIG. 17.
FIG. 19 is a flowchart illustrating an example of outputting a plurality of operating state signals, an example of receiving a power state setting signal, and an example of changing a first power state in FIG. 1.
FIG. 20 is a flowchart illustrating an example of operations of FIG. 19.
FIGS. 21A, 21B, 21C, 21D, 21E and 21F are diagrams for describing operations of FIG. 20.
FIG. 22 is a flowchart illustrating an example of operations of FIG. 19.
FIG. 23 is a block diagram illustrating a storage system according to example embodiments.
FIGS. 24A, 24B and 24C are diagrams for describing operations of FIG. 22.
FIG. 25 is a flowchart illustrating a method of operating a storage system according to example embodiments.
FIG. 26 is a block diagram illustrating a data center including a storage system according to example embodiments.

### DETAILED DESCRIPTION OF THE EMBODIMENTS

Various example embodiments will be described more fully with reference to the accompanying drawings, in which embodiments are shown. The present disclosure may, however, be embodied in many different forms and should not be construed as limited to the embodiments set forth herein. Like reference numerals refer to like elements throughout this application.

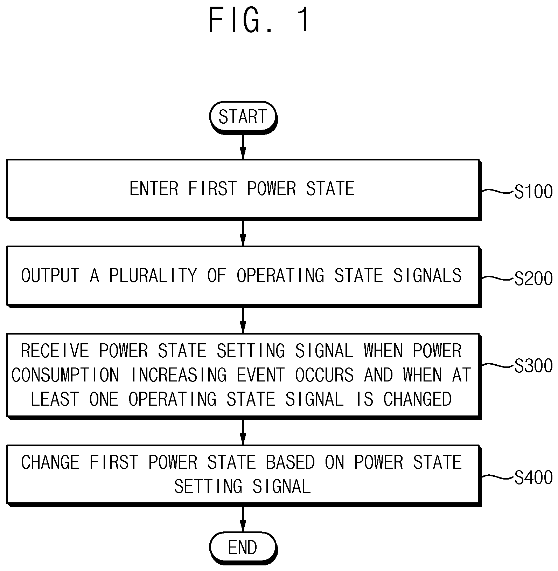

FIG. 1 is a flowchart illustrating a method of operating a storage system according to example embodiments.

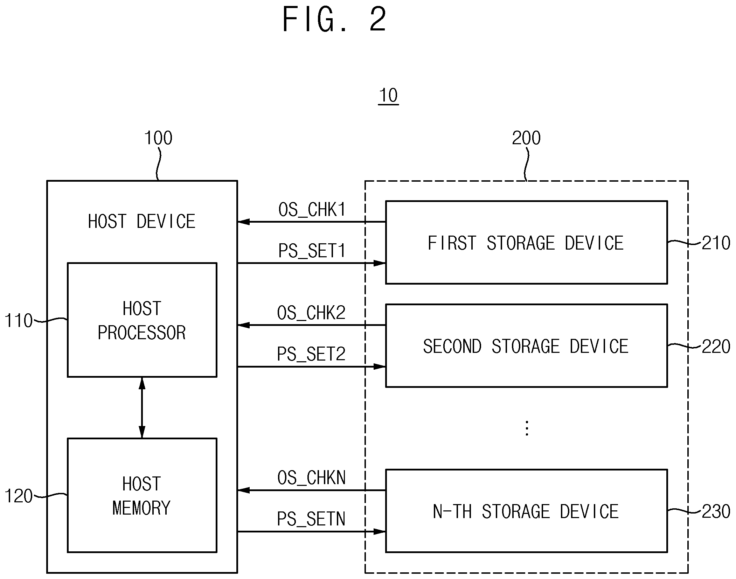

Referring to FIG. 1, a method of operating a storage system according to example embodiments is performed by a storage system that includes a plurality of storage devices. The storage system may further include a host device that controls operations of the plurality of storage devices. An example of the storage system will be described with reference to FIG. 2.

In the method of operating the storage system according to example embodiments, the plurality of storage devices enter a first power state (operation S100). The first power state (or status) represents a power state in which power consumption of each storage device is less than a reference power consumption, and may be referred to as a low power state. In other words, at the beginning of operation, the plurality of storage devices may operate with relatively little power consumption.

The plurality of storage devices output a plurality of operating state signals, respectively (operation S200). The plurality of operating state signals represent operating states of the plurality of storage devices, respectively. For example, one operating state signal may be output from one storage device. For example, each operating state signal may have one of a plurality of values that are different from each other, and an operating state of each storage device may be checked or determined based on a value of each operating state signal.

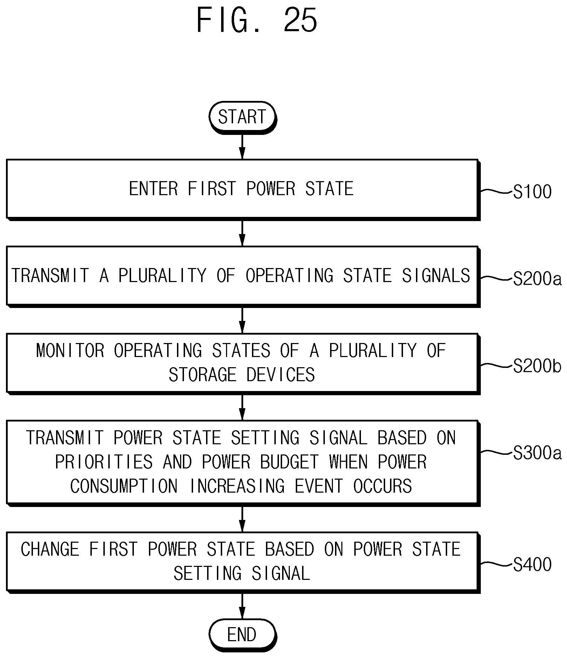

In some example embodiments, as will be described with reference to FIG. 25, the plurality of operating state signals may be transmitted to the host device, and the host device may monitor the operating states of the plurality of storage devices based on the plurality of operating state signals.

When a power consumption increasing event occurs on at least one of the plurality of storage devices and when at least one of the plurality of operating state signals is changed, at least one of the plurality of storage devices receives a power state setting signal (operation S300). Based on the power state setting signal, the first power state of at least one of the plurality of storage devices is changed such that power consumption of at least one of the plurality of storage devices is greater than or equal to the reference power consumption (operation S400). For example, one storage device may receive one power state setting signal. For example, each power state setting signal may have one of a plurality of values that are different from each other, and a power state of each storage device may be controlled or adjusted based on a value of each power state setting signal. For example, power states of the plurality of storage devices may be independently and/or individually changed. For example, each storage device may perform the power consumption increasing event based on the changed power state.

In some example embodiments, as will be described with reference to FIG. 25, the power state setting signal may be generated by the host device, and may be transmitted from the host device to each storage device.

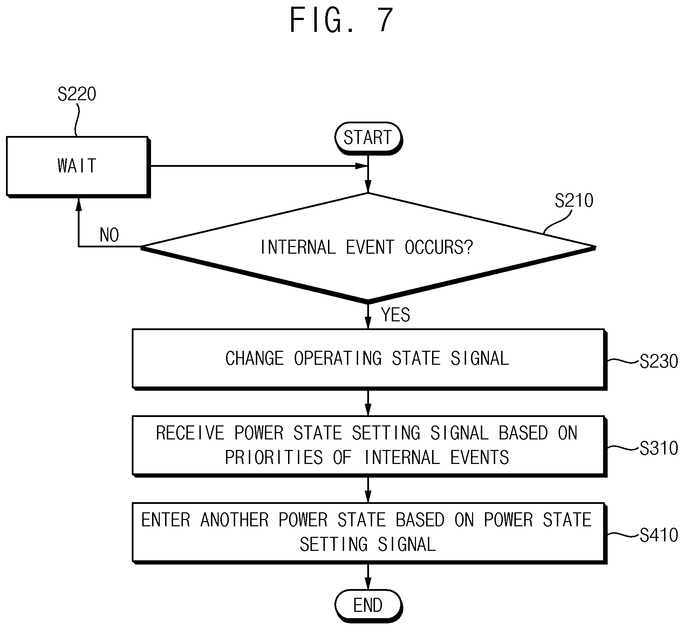

In some example embodiments, as will be described with reference to FIG. 7, the power consumption increasing event may include a plurality of internal events that are internally performed in the plurality of storage devices. For example, the plurality of internal events may include an internal data copy operation performed in each storage device. In this example, the power state of each storage device may be adjusted based on at least one of priorities of the plurality of internal events and power budget of the storage system such that the power state of each storage device is appropriate or suitable for each internal event.

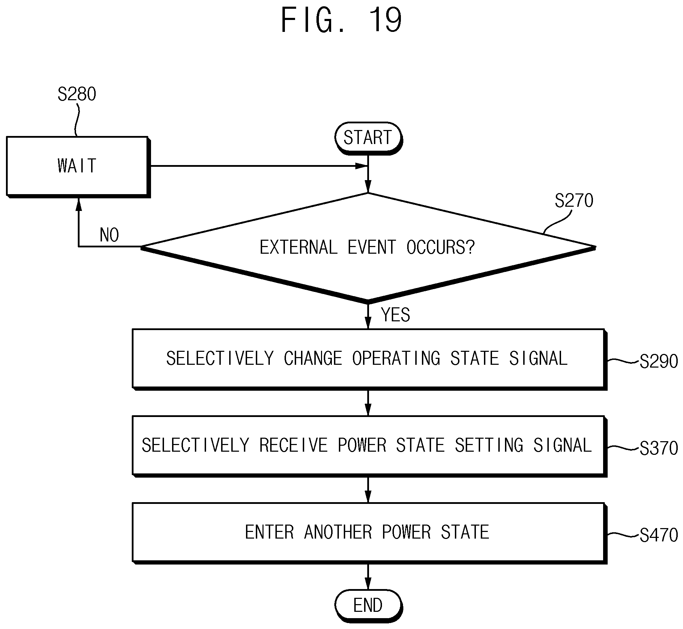

In other example embodiments, as will be described with reference to FIG. 19, the power consumption increasing event may include a plurality of external events that are performed including an operation of outputting a signal from the plurality of storage devices to an external device. For example, the plurality of external events may include a rebuilding operation for a replacement of each storage device in an event of failure and/or malfunction in each storage device, a sudden power off (SPO) situation in which the storage system is suddenly powered off while the storage system is operating, etc. In this example, the power state of each storage device may be adjusted based on the power budget of the storage system such that the power state of each storage device is appropriate or suitable for each external event.

In still other example embodiments, the power consumption increasing event may include both the plurality of internal events and the plurality of external events.

Various schemes have been proposed to reduce the power consumption of storage devices in a storage system. For example, a throttling scheme has been applied to reduce the performance and power consumption of storage devices depending on specific situations and/or environments. However, in a conventional storage system, power states of all storage devices were controlled and/or changed at once, and thus there were problems that the input/output (I/O) performance between the host device and the storage device may be reduced, and the internal I/O performance of the storage device may be also reduced.

In the method of operating the storage system according to example embodiments, the operating state of each storage device may be monitored when the plurality of storage devices enter the low power state and the power consumption of the plurality of storage devices is limited, and the power state of a specific storage device may be dynamically and/or adaptively changed to perform a specific event when the specific event occurs on the specific storage device. For example, the power state of each storage device may be selectively changed based on the priorities of events, the power budget of the storage system, etc. Accordingly, the power consumption of the storage system may be reduced while the operating performance of the storage system is improved or enhanced.

FIG. 2 is a block diagram illustrating a storage system according to example embodiments.

Referring to FIG. 2, a storage system 10 includes a host device 100 and a plurality of storage devices 200.

The host device 100 controls overall operations of the storage system 10. The host device 100 may include a host processor 110 and a host memory 120.

The host processor 110 may control an operation of the host device 100. For example, the host processor 110 may execute an operating system (OS), a system software, etc. For example, the operating system may include a file system for file management and a device driver for controlling peripheral devices including the storage devices 200 at the operating system level. The host memory 120 may store instructions and/or data that are executed and/or processed by the host processor 110. For example, the host memory 120 may include a dynamic random access memory (DRAM).

The plurality of storage devices 200 are accessed by the host device 100. The plurality of storage devices 200 may include first to N-th storage devices 210, 220, ..., 230, where N is a positive integer greater than or equal to two.

The plurality of storage devices 200 may output a plurality of operating state signals OS_CHK1, OS_CHK2, ..., OS_CHKN representing operating states of the plurality of storage devices 200, and may transmit the plurality of operating state signals OS_CHK1, OS_CHK2, ..., OS_CHKN to the host device 100. The plurality of storage devices 200 may receive a plurality of power state setting signals PS_SET1, PS_SET2, ..., PS_SETN for controlling power states of the plurality of storage devices 200 from the host device 100. For example, the first storage device 210 may output the first operating state signal OS_CHK1, and may receive the first power state setting signal PS_SET1.

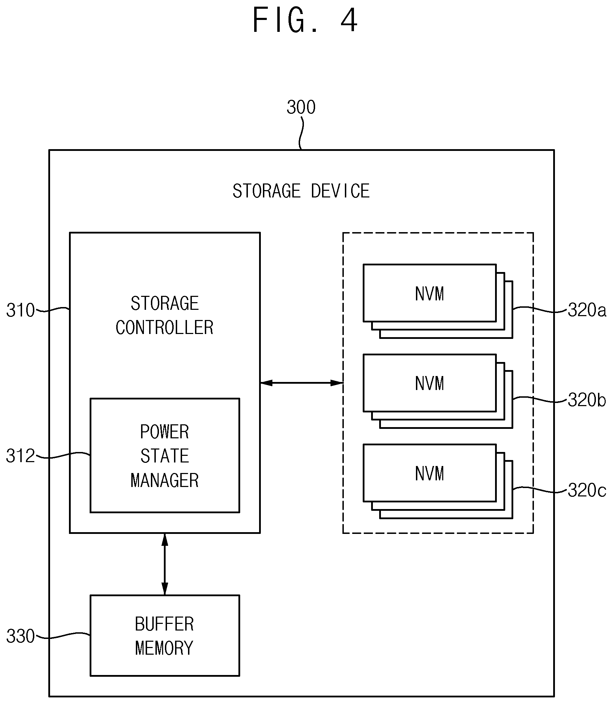

An example of each storage device will be described with reference to FIG. 4.

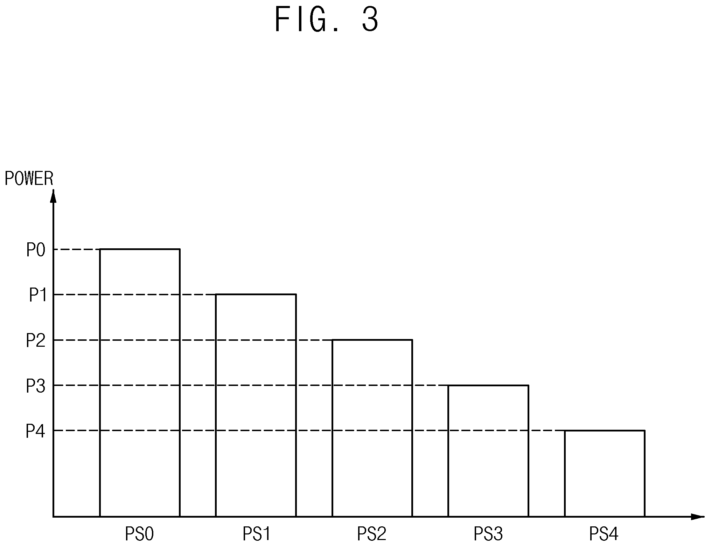

FIG. 3 is a diagram illustrating an example of a power state of a storage device included in a storage system according to example embodiments.

Referring to FIG. 3, each storage device may operate in one of a plurality of power states PS0, PS1, PS2, PS3 and PS4.

For example, when each storage device has the power state PS0, each storage device may operate with first power consumption P0 that is the largest power consumption, and may operate with first performance that is the highest performance. When each storage device has the power state PS1, each storage device may operate with second power consumption P1 that is less than the first power consumption P0, and may operate with second performance that is lower than the first performance. When each storage device has the power state PS2, each storage device may operate with third power consumption P2 that is less than the second power consumption P1, and may operate with third performance that is lower than the second performance. When each storage device has the power state PS3, each storage device may operate with fourth power consumption P3 that is less than the third power consumption P2, and may operate with fourth performance that is lower than the third performance. When each storage device has the power state PS4, each storage device may operate with fifth power consumption P4 that is the least power consumption and is less than the fourth power consumption P3, and may operate with fifth performance that is the lowest performance and is lower than the fourth performance.

Although FIG. 3 illustrates five power states PS0, PS1, PS2, PS3 and PS4 as an example, example embodiments are not limited thereto, and the number of power states for each storage device may be variously determined according to example embodiments.

FIG. 4 is a block diagram illustrating an example of a storage device included in a storage system according to example embodiments.

Referring to FIG. 4, a storage device 300 may include a storage controller 310, a plurality of nonvolatile memories 320a, 320b and 320c, and a buffer memory 330. For example, the storage device 300 may be one of the plurality of storage devices 200 in FIG. 2.

The storage controller 310 may control an operation of the storage device 300. For example, the storage controller 310 may control operations (e.g., a write operation and/or a read operation) of the storage device 300 based on requests (e.g., a write request and/or a read requests) that are received from a host device (e.g., the host device 100 in FIG. 2), and may control an exchange of data (e.g., a transmission of write data and/or read data) between the host device and the storage device 300

The plurality of nonvolatile memories 320a, 320b and 320c may be controlled by the storage controller 310, and may store a plurality of data. For example, the plurality of nonvolatile memories 320a, 320b and 320c may store the meta data, various user data, or the like.

In some example embodiments, each of the plurality of nonvolatile memories 320a, 320b and 320c may include a NAND flash memory. In other example embodiments, each of the plurality of nonvolatile memories 320a, 320b and 320c may include one of an electrically erasable programmable read only memory (EEPROM), a phase-change random access memory (PRAM), a resistive random access memory (RRAM), a magnetic random access memory (MRAM), a ferroelectric random access memory (FRAM), or the like.

The buffer memory 330 may store instructions and/or data that are executed and/or processed by the storage controller 310, and may temporarily store data stored in or to be stored into the plurality of nonvolatile memories 320a, 320b and 320c. For example, the buffer memory 330 may include at least one of various volatile memories, e.g., a static random access memory (SRAM), a DRAM, or the like.

To perform the method of operating the storage system according to example embodiments described with reference to FIG. 1, the storage controller 310 may include a power state manager 312.

The power state manager 312 may control the storage device 300 to enter a first power state in which power consumption of the storage device 300 is less than reference power consumption, may output an operating state signal indicating an operating state of the storage device 300, may receive a power state setting signal when a power consumption increasing event occurs on the storage device 300 and when the operating state signal is changed, and may change the first power state of the storage device 300 based on the power state setting signal such that the power consumption of the storage device 300 is greater than or equal to the reference power consumption.

In some example embodiments, the storage device 300 may be a solid state drive (SSD). In other example embodiments, the storage device 300 may be a universal flash storage (UFS), a multi-media card (MMC) or an embedded multi-media card (eMMC). In some embodiments, the storage device 300 may be one of a secure digital (SD) card, a micro SD card, a memory stick, a chip card, a universal serial bus (USB) card, a smart card, a compact flash (CF) card, or the like.

In some example embodiments, the storage device 300 may be connected to the host device via a block accessible interface which may include, for example, a UFS, an eMMC, a nonvolatile memory express (NVMe) bus, a serial advanced technology attachment (SATA) bus, a small computer small interface (SCSI) bus, a serial attached SCSI (SAS) bus, or the like. The storage device 300 may use a block accessible address space corresponding to an access size of the plurality of nonvolatile memories 320a, 320b and 320c to provide the block accessible interface to the host device, for allowing the access by units of a memory block with respect to data stored in the plurality of nonvolatile memories 320a, 320b and 320c.

In some example embodiments, a storage system (e.g., the storage system 10 in FIG. 2) including the storage device 300 may be any computing system, such as a personal computer (PC), a server computer, a data center, a workstation, a digital television, a set-top box, a navigation system, etc. In some example embodiments, the storage system including the storage device 300 may be any mobile system, such as a mobile phone, a smart phone, a tablet computer, a laptop computer, a personal digital assistant (PDA), a portable multimedia player (PMP), a digital camera, a portable game console, a music player, a camcorder, a video player, a navigation device, a wearable device, an internet of things (IoT) device, an internet of everything (IoE) device, an e-book reader, a virtual reality (VR) device, an augmented reality (AR) device, a robotic device, a drone, an automotive, etc.

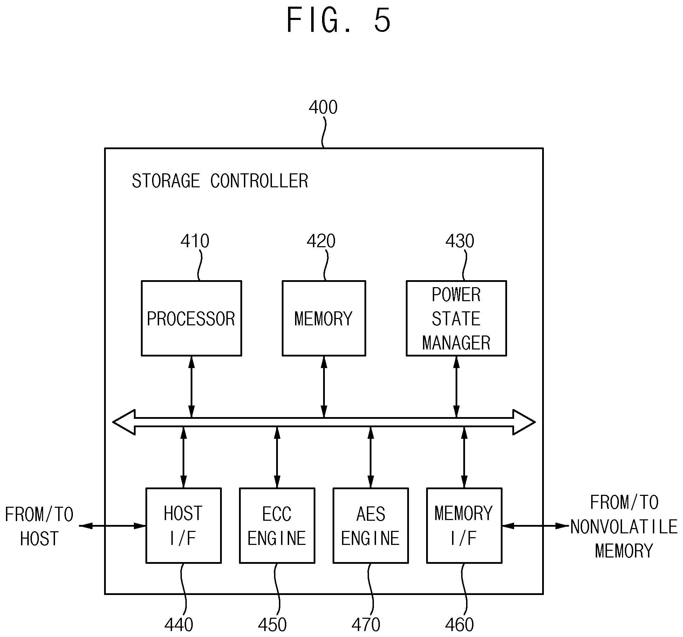

FIG. 5 is a block diagram illustrating an example of a storage controller included in a storage device of FIG. 4.

Referring to FIG. 5, a storage controller 400 may include a processor 410, a memory 420, a power state manager 430, a host interface 440, an error correction code (ECC) engine 450, a memory interface 460 and an advanced encryption standard (AES) engine 470.

The processor 410 may control an operation of the storage controller 400 in response to a request received via the host interface 440 from a host device (e.g., the host device 100 in FIG. 2). For example, the processor 410 may control an operation of a storage device (e.g., one of the plurality of storage devices 200 in FIG. 2), and may control respective components by employing firmware for operating the storage device.

The memory 420 may store instructions and data executed and processed by the processor 410. For example, the memory 420 may be implemented with a volatile memory, such as a DRAM, a SRAM, a cache memory, or the like.

The power state manager 430 may be used to perform the method of operating the storage system according to example embodiments, and may be substantially the same as the power state manager 312 in FIG. 4.

The ECC engine 450 for error correction may perform coded modulation using a Bose-Chaudhuri-Hocquenghem (BCH) code, a low density parity check (LDPC) code, a turbo code, a Reed-Solomon code, a convolution code, a recursive systematic code (RSC), a trellis-coded modulation (TCM), a block coded modulation (BCM), etc., or may perform ECC encoding and ECC decoding using above-described codes or other error correction codes.

The host interface 440 may provide physical connections between the host device and the storage device. The host interface 440 may provide an interface corresponding to a bus format of the host device for communication between the host device and the storage device. In some example embodiments, the bus format of the host device may be a small computer system interface (SCSI) or a serial attached SCSI (SAS) interface. In other example embodiments, the bus format of the host device may be a USB, a peripheral component interconnect (PCI) express (PCIe), an advanced technology attachment (ATA), a parallel ATA (PATA), a serial ATA (SATA), a nonvolatile memory (NVM) express (NVMe), a compute express link (CXL), etc., format.

The memory interface 460 may exchange data with a nonvolatile memory (e.g., one of the plurality of nonvolatile memories 320a, 320b and 320c in FIG. 4). The memory interface 460 may transfer data to the nonvolatile memory, or may receive data read from the nonvolatile memory. In some example embodiments, the memory interface 460 may be connected to the nonvolatile memory via one channel. In other example embodiments, the memory interface 460 may be connected to the nonvolatile memory via two or more channels. For example, the memory interface 460 may be configured to comply with a standard protocol, such as Toggle or open NAND flash interface (ONFI).

The AES engine 470 may perform at least one of an encryption operation and a decryption operation on data input to the storage controller 400 by using a symmetric-key algorithm. Although not illustrated in detail, the AES engine 470 may include an encryption module and a decryption module. For example, the encryption module and the decryption module may be implemented as separate modules. For example, one module capable of performing both encryption and decryption operations may be implemented in the AES engine 470.

The storage controller 400 may operate based on a flash translation layer (FTL). The FTL may perform various functions, such as an address mapping operation, a wear-leveling operation, a garbage collection operation, or the like. The address mapping operation may be an operation of converting a logical address received from the host device into a physical address used to actually store data in the nonvolatile memory. The wear-leveling operation may be a technique for preventing excessive deterioration of a specific block by allowing blocks of the nonvolatile memory to be uniformly used. As an example, the wear-leveling operation may be implemented using a firmware technique that balances erase counts of physical blocks. The garbage collection operation may be a technique for ensuring usable capacity in the nonvolatile memory by erasing an existing block after copying valid data of the existing block to a new block.

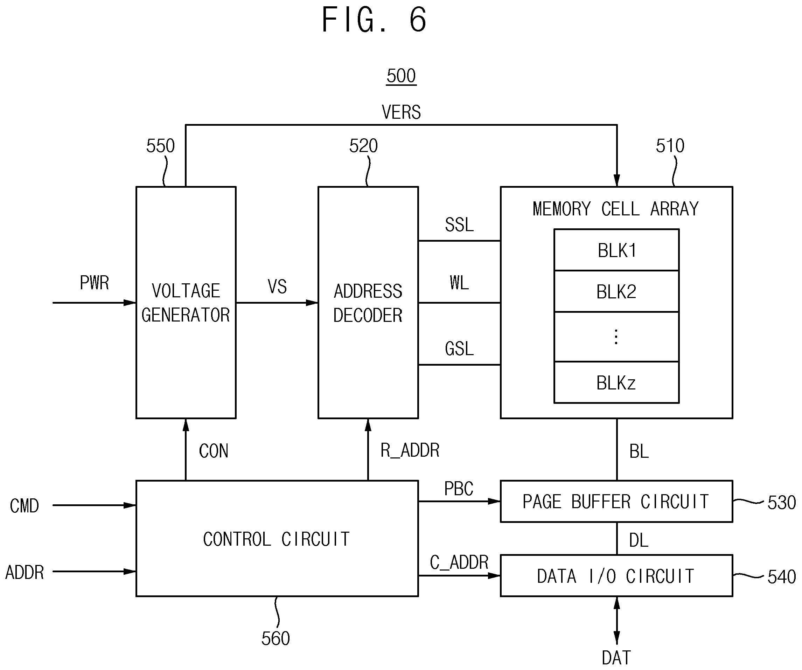

FIG. 6 is a block diagram illustrating an example of a nonvolatile memory included in a storage device of FIG. 4.

Referring to FIG. 6, a nonvolatile memory 500 includes a memory cell array 510, an address decoder 520, a page buffer circuit 530, a data input/output (I/O) circuit 540, a voltage generator 550 and a control circuit 560.

The memory cell array 510 is connected to the address decoder 520 via a plurality of string selection lines SSL, a plurality of wordlines WL and a plurality of ground selection lines GSL. The memory cell array 510 is further connected to the page buffer circuit 530 via a plurality of bitlines BL. The memory cell array 510 may include a plurality of memory cells (e.g., a plurality of nonvolatile memory cells) that are connected to the plurality of wordlines WL and the plurality of bitlines BL. The memory cell array 510 may be divided into a plurality of memory blocks BLK1, BLK2, ..., BLKz each of which includes memory cells. In addition, each of the plurality of memory blocks BLK1 to BLKz may be divided into a plurality of pages.

In some example embodiments, the plurality of memory cells included in the memory cell array 510 may be arranged in a two-dimensional (2D) array structure or a three-dimensional (3D) vertical array structure. The 3D vertical array structure may include vertical cell strings that are vertically oriented such that at least one memory cell is located over another memory cell. The at least one memory cell may comprise a charge trap layer. The following patent documents, which are hereby incorporated by reference in their entirety, describe suitable configurations for a memory cell array including a 3D vertical array structure, in which the three-dimensional memory array is configured as a plurality of levels, with wordlines and/or bitlines shared between levels: U.S. Pat. Nos. 7,679,133; 8,553,466; 8,654,587; 8,559,235; and US Pat. Pub. No. 2011/0233648.

The control circuit 560 receives a command CMD and an address ADDR from an outside (e.g., from the storage controller 310 in FIG. 4), and control erasure, programming, and read operations of the nonvolatile memory 500 based on the command CMD and the address ADDR. An erasure operation may include performing a sequence of erase loops, and a program operation may include performing a sequence of program loops. Each program loop may include a program operation and a program verification operation. Each erase loop may include an erase operation and an erase verification operation. The read operation may include a normal read operation and data recovery read operation.

For example, the control circuit 560 may generate control signals CON, which are used for controlling the voltage generator 550, and may generate control signal PBC for controlling the page buffer circuit 530, based on the command CMD, and may generate a row address R_ADDR and a column address C_ADDR based on the address ADDR. The control circuit 560 may provide the row address R_ADDR to the address decoder 520 and may provide the column address C_ADDR to the data I/O circuit 540.

The address decoder 520 may be connected to the memory cell array 510 via the plurality of string selection lines SSL, the plurality of wordlines WL and the plurality of ground selection lines GSL. For example, in the data erase/write/read operations, the address decoder 520 may determine at least one of the plurality of wordlines WL as a selected wordline, may determine at least one of the plurality of string selection lines SSL as a selected string selection line, and may determine at least one of the plurality of ground selection lines GSL as a selected ground selection line, based on the row address R_ADDR.

The voltage generator 550 may generate voltages VS that are used for an operation of the nonvolatile memory 500 based on a power PWR and the control signals CON. The voltages VS may be applied to the plurality of string selection lines SSL, the plurality of wordlines WL and the plurality of ground selection lines GSL via the address decoder 520. In addition, the voltage generator 550 may generate an erase voltage VERS that may be needed for the data erase operation based on the power PWR and the control signals CON. The erase voltage VERS may be applied to the memory cell array 510 directly or via the bitline BL.

The page buffer circuit 530 may be connected to the memory cell array 510 via the plurality of bitlines BL. The page buffer circuit 530 may include a plurality of page buffers. The page buffer circuit 530 may store data DAT to be programmed into the memory cell array 510 or may read data DAT sensed from the memory cell array 510. In other words, the page buffer circuit 530 may operate as a write driver or a sensing amplifier depending on an operation mode of the nonvolatile memory 500.

The data I/O circuit 540 may be connected to the page buffer circuit 530 via data lines DL. The data I/O circuit 540 may provide the data DAT from the outside of the nonvolatile memory 500 to the memory cell array 510 via the page buffer circuit 530 or may provide the data DAT from the memory cell array 510 to the outside of the nonvolatile memory 500, based on the column address C_ADDR.

FIG. 7 is a flowchart illustrating an example of outputting a plurality of operating state signals, an example of receiving a power state setting signal, and an example of changing a first power state in FIG. 1.

Referring to FIGS. 1 and 7, in operation S200, while each storage device is operating in the first power state, it may be checked or determined whether a specific internal event among the plurality of internal events occurs (or has occurred) on each storage device (operation S210).

In some example embodiments, the plurality of internal events may include the internal data copy operation performed in each storage device. For example, the internal data copy operation may represent an operation of copying data from a source region (or area) in each storage device to a destination region in each storage device. For example, the internal data copy operation may include, depending on its purpose, a periodic reclaim operation for preventing an uncorrectable ECC (UECC), a compaction operation for merging data, a wear-leveling operation for preventing excessive degradation of a specific block, a bad block management operation for managing bad blocks, etc.

When the specific internal event does not occur (operation S210: NO), each storage device may wait while maintaining the first power state (operation S220). When the specific internal event occurs (operation S210: YES), each storage device may need to change the power state to perform the specific internal event. Thus, each storage device may change each operating state signal to notify the occurrence of the specific internal event (operation S230), and may output the changed operating state signal.

In some example embodiments, each operating state signal may be generated and output periodically, and the value of each operating state signal may be changed when the specific internal event occurs. In other example embodiments, each operating state signal may be generated and output only when the specific internal event occurs, and the value of each operating state signal may be changed only when the specific internal event occurs.

In operation S300, each storage device may receive each power state setting signal based on a priority of the specific internal event (operation S310). For example, a power state to be changed for each storage device may be determined based on the priority of the specific internal event among the plurality of internal events.

In some example embodiments, the priorities of the plurality of internal events may be determined in advance. For example, as described above, when the plurality of internal events include the periodic reclaim operation, the compaction operation, the wear-leveling operation and the bad block management operation, the periodic reclaim operation may have a first priority that is the highest priority, the compaction operation may have a second priority that is lower than the first priority, the wear-leveling operation may have a third priority that is lower than the second priority, and the bad block management operation may have a fourth priority that is the lowest priority.

In operation S400, each storage device may exit the first power state and may enter a power state different from the first power state based on each power state setting signal (operation S410). For example, each storage device may perform the specific internal event while operating in the power state different from the first power state.

In some example embodiments, among the plurality of power states PS0, PS1, PS2, PS3 and PS4 in FIG. 3, the first power state may be the power state PS4 in which each storage device operates with the least power consumption, and the power state different from the first power state may be one of the remaining power states PS0, PS1, PS2 and PS3 in which each storage device operates with power consumption greater than the least power consumption. In this example, the reference power consumption may be greater than the fifth power consumption P4 and may be less than or equal to the fourth power consumption P3. However, example embodiments are not limited thereto.

In some example embodiments, the periodic reclaim operation, the compaction operation, the wear-leveling operation and the bad block management operation may be performed in the power state PS0, the power state PS1, the power state PS2 and the power state PS3 in FIG. 3, respectively. However, example embodiments are not limited thereto.

Hereinafter, example embodiments will be described based on an example where the first power state is the power state PS4 in FIG. 3. However, example embodiments are not limited thereto, and the first power state may be an arbitrary power state other than the power state PS0 in which each storage device operates with the largest power consumption, and the power state different from the first power state may be an arbitrary power state in which each storage device operates with power consumption greater than that of the first power state.

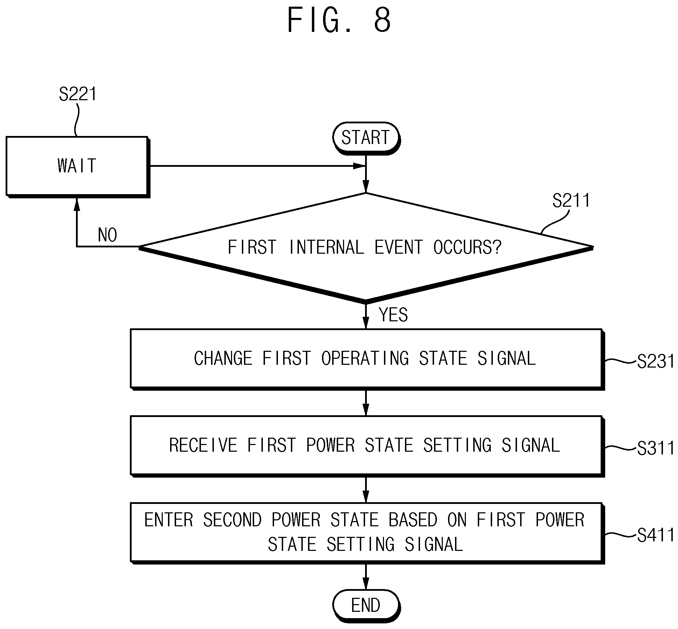

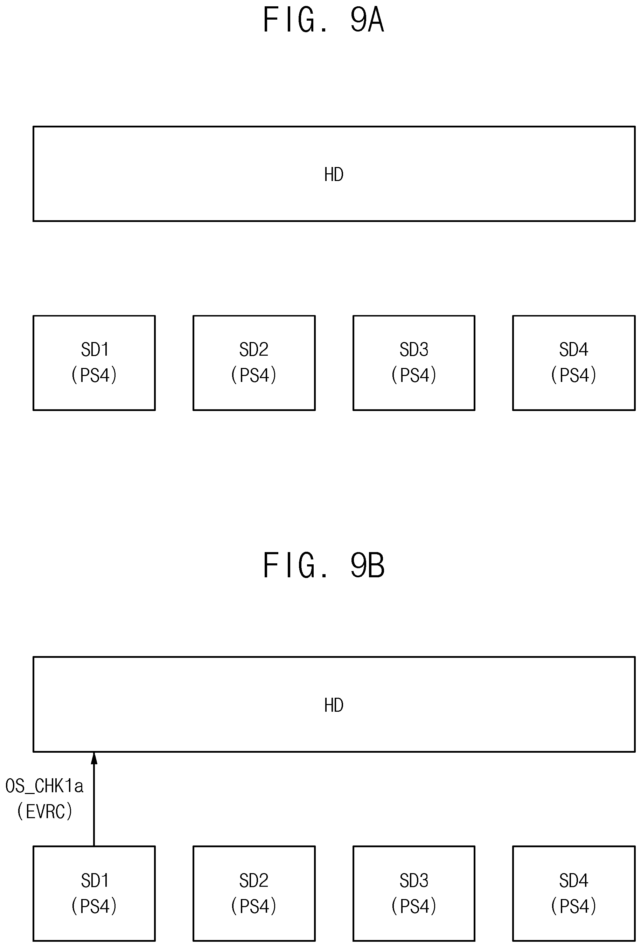

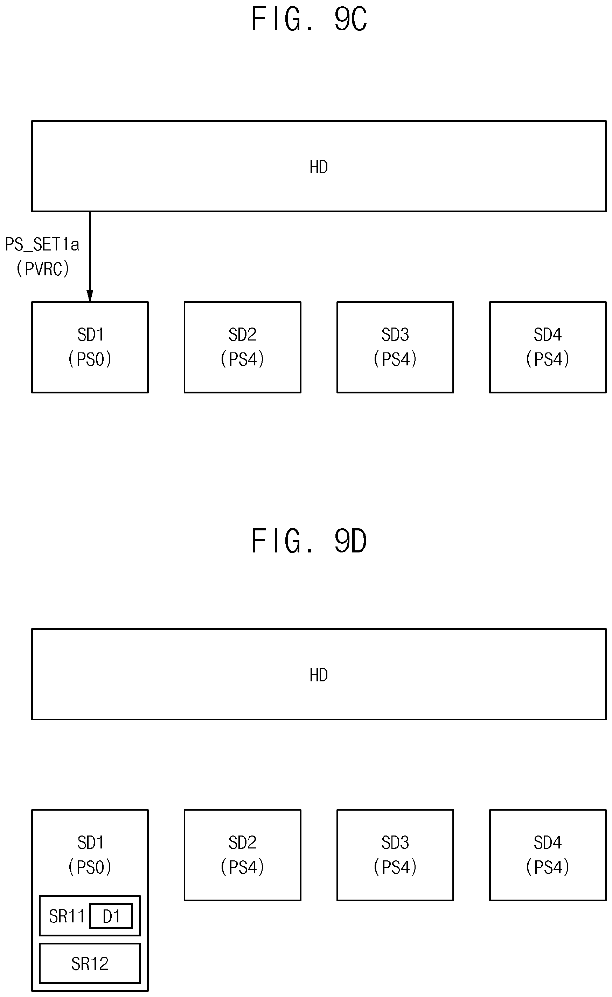

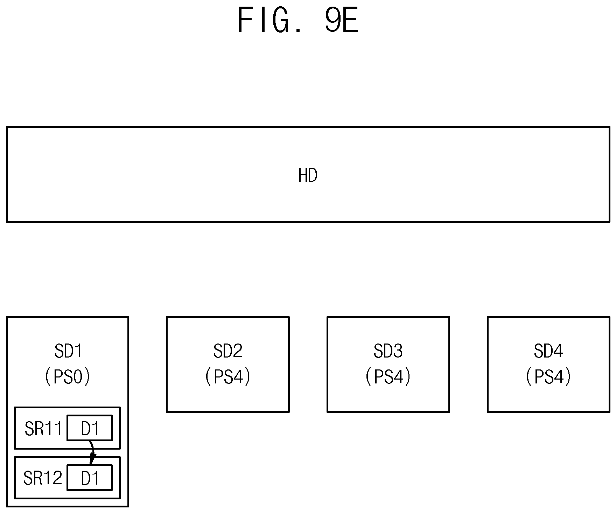

FIG. 8 is a flowchart illustrating an example of an operation of FIG. 7. FIGS. 9A, 9B, 9C, 9D and 9E are diagrams for describing an operation of FIG. 8.

Referring to FIGS. 1, 8, 9A, 9B, 9C, 9D and 9E, an example of one host device HD and four storage devices SD1, SD2, SD3 and SD4 controlled by the host device HD is illustrated.

In operation S100, as illustrated in FIG. 9A, all of the storage devices SD1, SD2, SD3 and SD4 may enter the first power state PS4 in which each storage device operates with the least power consumption.

In operation S200, as illustrated in FIG. 9B, when a first internal event for internal data copying occurs on the first storage device SD1 (operation S211: YES), the first storage device SD1 may change and output a first operating state signal OS_CHK1a to have an operating state value EVRC (operation S231), and the host device HD may receive the first operating state signal OS_CHK1a having the operating state value EVRC. For example, the first internal event may be the periodic reclaim operation having a relatively high priority, and the operating state value EVRC may represent the periodic reclaim operation.

Although not illustrated in detail, when the first internal event does not occur on the first storage device SD1 (operation S211: NO), the first storage device SD1 may wait while maintaining the first power state PS4 (operation S221).

In operation S300, as illustrated in FIG. 9C, the host device HD may generate and output a first power state setting signal PS_SET1a having a power state value PVRC based on the first operating state signal OS_CHK1a having the operating state value EVRC, and the first storage device SD1 may receive the first power state setting signal PS_SET1a having the power state value PVRC (operation S311). For example, the power state value PVRC may represent a power state needed for the periodic reclaim operation.

In operation S400, as illustrated in FIG. 9C, the first storage device SD1 may enter the second power state PS0 in which the first storage device SD1 operates with power consumption greater than that of the first power state PS4 based on the first power state setting signal PS_SET1a having the power state value PVRC (operation S411). For example, when the first internal event is the periodic reclaim operation, the periodic reclaim operation may have a relatively high priority and may require a relatively large power consumption, and thus the power state of the first storage device SD1 may be changed to the power state PS0 for a relatively large power consumption.

Thereafter, in operation S400, as illustrated in FIGS. 9D and 9E, the first storage device SD1 may perform the first internal event in the second power state PS0. For example, the first storage device SD1 may include a first storage region SR11 and a second storage region SR12, and may copy data D1 in the first storage region SR11, which is a source region, to the second storage region SR12, which is a destination region. For example, the first and second storage regions SR11 and SR12 may be included in a nonvolatile memory within the first storage device SD1. For example, the data D1 in the first storage region SR11 may be erased after the copy operation.

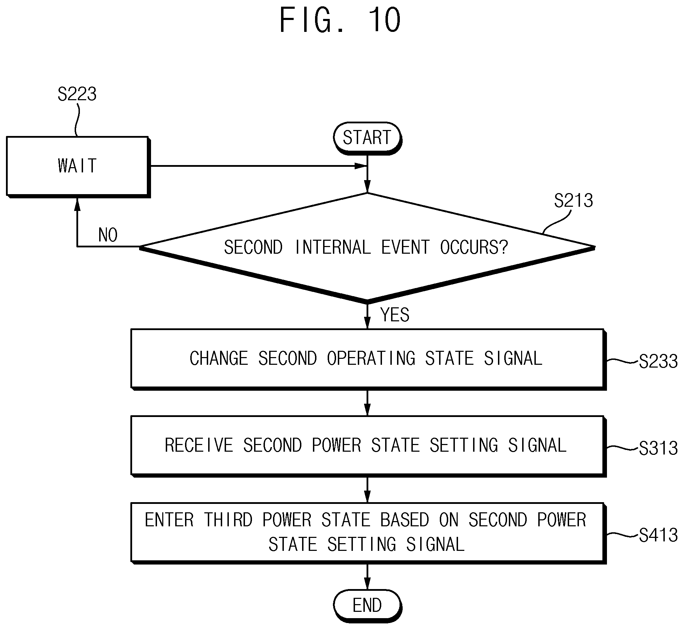

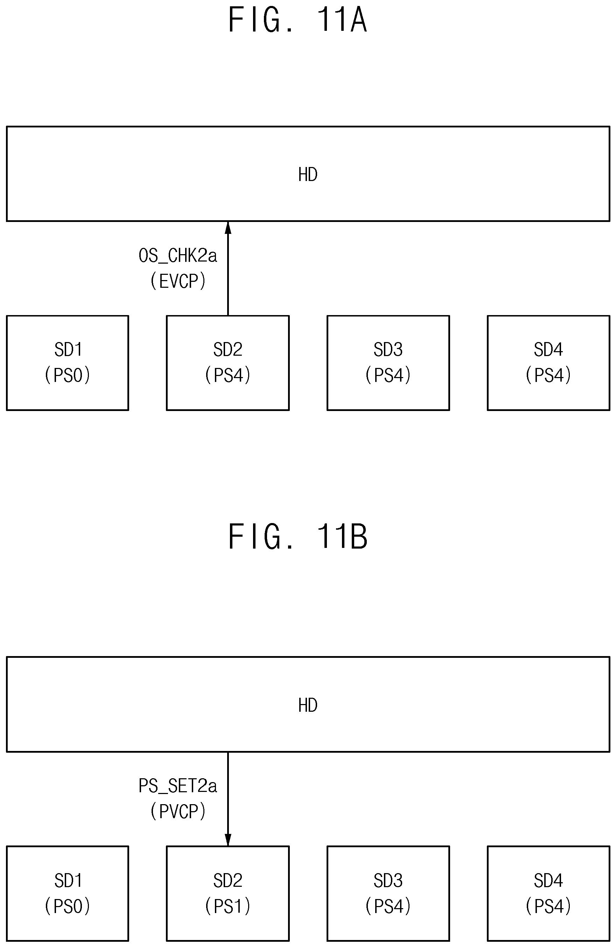

FIG. 10 is a flowchart illustrating an example of an operation of FIG. 7. FIGS. 11A and 11B are diagrams for describing an operation of FIG. 10. The descriptions repeated with or overlapping with descriptions of FIGS. 8, 9A, 9B, 9C, 9D and 9E will be omitted in the interest of brevity.

Referring to FIGS. 1, 10, 11A and 11B, an example where a second internal event occurs on the second storage device SD2 when the first internal event occurs on the first storage device SD1, which is described with reference to FIGS. 8, 9A, 9B, 9C, 9D and 9E, and before the execution of the first internal event is completed is illustrated.

In operation S200, as illustrated in FIG. 11A, when the second internal event for internal data copying, which is different from the first internal event, occurs on the second storage device SD2 different from the first storage device SD1 (operation S213: YES), the second storage device SD2 may change and output a second operating state signal OS_CHK2a to have an operating state value EVCP different from the operating state value EVRC (operation S233), and the host device HD may receive the second operating state signal OS_CHK2a having the operating state value EVCP. For example, the second internal event may be the compaction operation having a priority lower than that of the periodic reclaim operation, which is the first internal event, and the operating state value EVCP may represent the compaction operation.

Although not illustrated in detail, when the second internal event does not occur on the second storage device SD2 (operation S213: NO), the second storage device SD2 may wait while maintaining the first power state PS4 (operation S223).

In operation S300, as illustrated in FIG. 11B, the host device HD may generate and output a second power state setting signal PS_SET2a having a power state value PVCP different from the power state value PVRC based on the second operating state signal OS_CHK2a having the operating state value EVCP, and the second storage device SD2 may receive the second power state setting signal PS_SET2a having the power state value PVCP (operation S313). For example, the power state value PVCP may represent a power state needed for the compaction operation.

In operation S400, as illustrated in FIG. 11B, the second storage device SD2 may enter a third power state PS1 different from the second power state PS0 in which the second storage device SD2 operates with power consumption greater than that of the first power state PS4 based on the second power state setting signal PS_SET2a having the power state value PVCP. For example, when the second internal event is the compaction operation, the compaction operation has a priority lower than that of the periodic reclaim operation and may require a relatively less power consumption, and thus the power state of the second storage device SD2 may be changed to the power state PS1 for power consumption less than that of the power state PS0.

As described above, the power states of the first and second storage devices SD1 and SD2 may be controlled differently depending on the priorities of the first and second internal events. For example, when the first internal event has a priority higher than that of the second internal event, the power consumption of the first storage device SD1 having the second power state PS0 may be greater than the power consumption of the second storage device SD2 having the third power state PS1. In other words, the dynamic power control may be implemented depending on the priorities of internal events.

Although not illustrated in detail, as with that described with reference to FIGS. 9D and 9E, the second storage device SD2 may perform the second internal event in the third power state PS1.

Although an example where the second internal event occurs after the first internal event occurs and before the first internal event is completed is illustrated, example embodiments are not limited thereto. For example, the second internal event may occur after the first internal event is completed, or the first and second internal events may occur substantially simultaneously or concurrently.

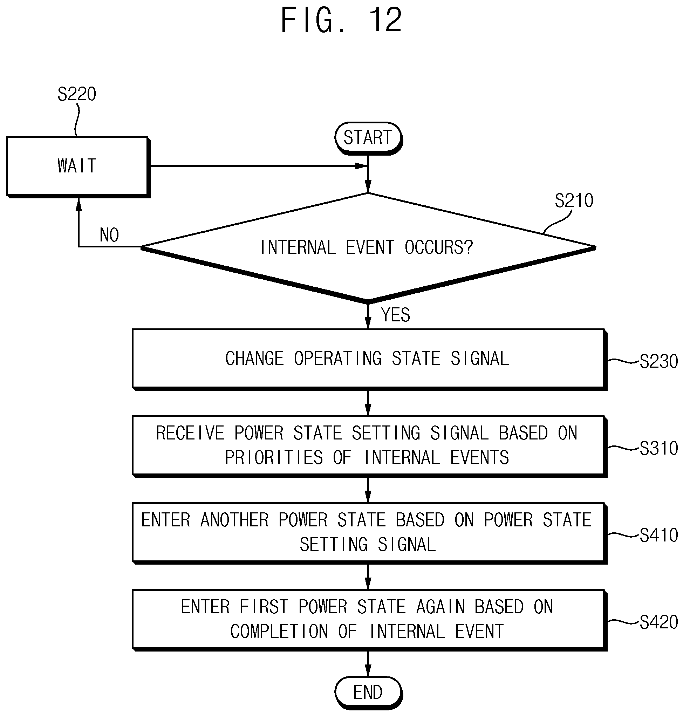

FIG. 12 is a flowchart illustrating an example of outputting a plurality of operating state signals, an example of receiving a power state setting signal and an example of changing a first power state in FIG. 1. The descriptions repeated with or overlapping with descriptions of FIG. 7 will be omitted in the interest of brevity.

Referring to FIGS. 1 and 12, operations S210, S220, S230, S310 and S410 may be substantially the same as those described with reference to FIG. 7.

In operation S400, after each storage device enters the power state different from the first power state and performs the specific internal event, each storage device may exit the power state different from the first power state and may enter the first power state again based on a completion of the specific internal event (operation S420). For example, each operating state signal may be changed again, each power state setting signal may be received again, and each storage device may enter the first power state again based on the power state setting signal.

In some example embodiments, when each operating state signal is generated and output periodically, each operating state signal may be changed again when the specific internal event is completed and a next generation and output cycle (or a next update cycle) of each operating state signal arrives. In other example embodiments, when each operating state signal is generated and output only when the specific internal event occurs, each operating state signal may be changed again immediately when the specific internal event is completed.

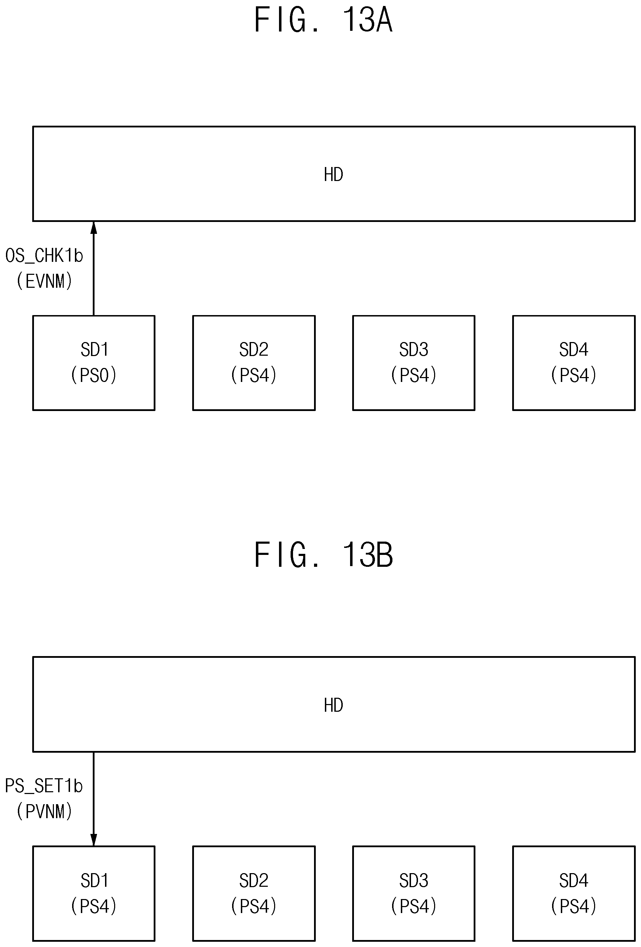

FIGS. 13A and 13B are diagrams for describing an example of entering a first power state again in FIG. 12.

Referring to FIGS 13A and 13B, an example of an operation after the first internal event is completed when the first internal event occurs on the first storage device SD1, which is described with reference to FIGS. 8, 9A, 9B, 9C, 9D and 9E, is illustrated.

As illustrated in FIG. 13A, when an execution of the first internal event is completed, the first storage device SD1 may change and output a first operating state signal OS_CHK1b to have an operating state value EVNM, and the host device HD may receive the first operating state signal OS_CHK1b having the operating state value EVNM. For example, the operating state value EVNM may represent a normal state in which the internal event is not performed.

As illustrated in FIG. 13B, the host device HD may generate and output a first power state setting signal PS_SET1b having a power state value PVNM based on the first operating state signal OS_CHK1b having the operating state value EVNM, and the first storage device SD1 may receive the first power state setting signal PS_SET1b having the power state value PVNM and may re-enter the first power state PS4 based on the first power state setting signal PS_SET1b having the power state value PVNM. For example, the power state value PVNM may represent the normal state and/or the first power state PS4.

As described above, according to example embodiments, the operation in which the first storage device SD1 re-enters the first power state PS4 may be performed immediately after the first internal event is completed or may be performed when the first internal event is completed and a next update cycle of the first operating state signal OS_CHK_1b arrives.

Although not illustrated in detail, when the second internal event occurs on the second storage device SD2 described with reference to FIGS. 10, 11A and 11B and after the second internal event is completed, the second storage device SD2 may enter the first power state PS4 again similarly to that described with reference to FIGS. 13A and 13B.

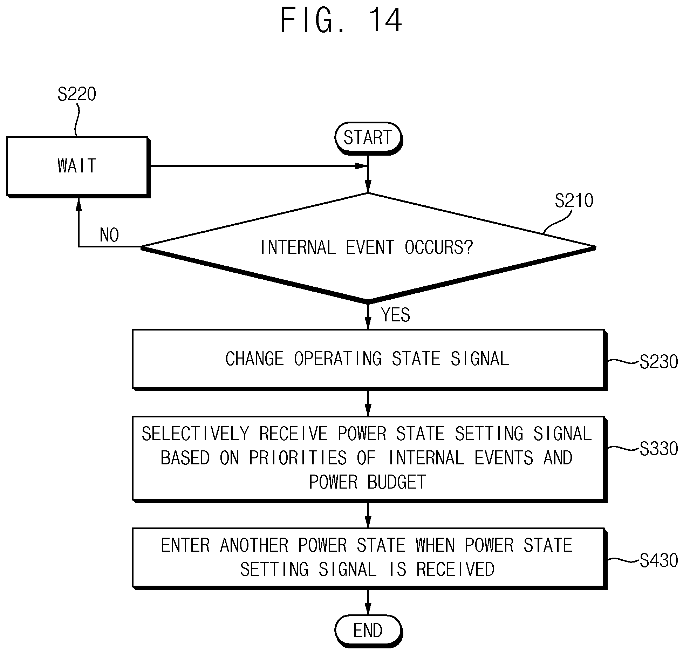

FIG. 14 is a flowchart illustrating an example of outputting a plurality of operating state signals, an example of receiving a power state setting signal and an example of changing a first power state in FIG. 1. The descriptions repeated with or overlapping with descriptions of FIG. 7 will be omitted in the interest of brevity.

Referring to FIGS. 1 and 14, operations S210, S220 and S230 may be substantially the same as those described with reference to FIG. 7.

In operation S300, each storage device may selectively receive each power state setting signal based on the priority of the specific internal event and power budget of the storage system (operation S330). For example, when it is expected that the total power consumption of the storage system will exceed the power budget when the power state of each storage device is changed, each storage device may not receive each power state setting signal or a reception of each power state setting signal may be delayed or postponed, even if the specific internal event occurs.

In operation S400, when each power state setting signal is received, each storage device may exit the first power state and may enter the power state different from the first power state based on each power state setting signal (operation S430).

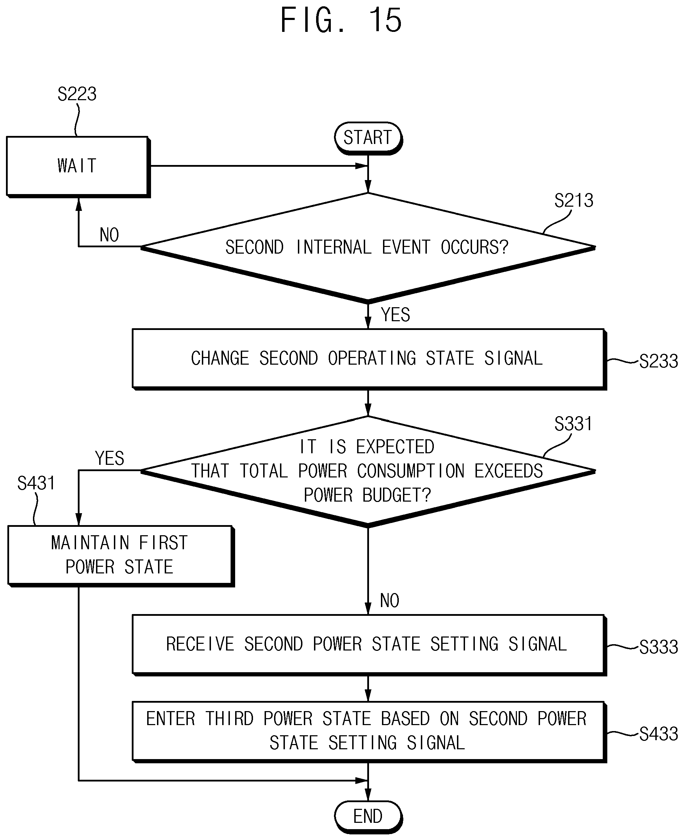

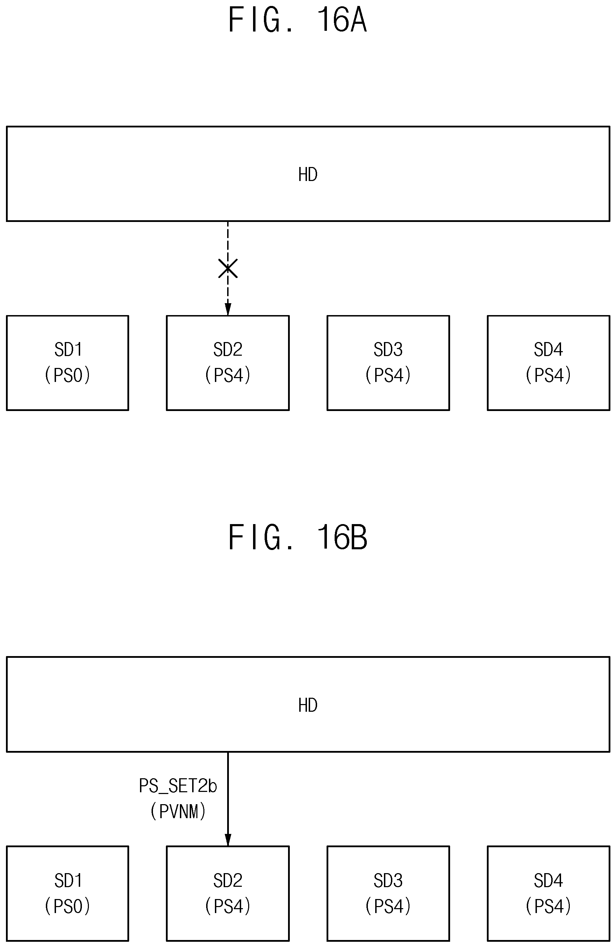

FIG. 15 is a flowchart illustrating an example of an operation of FIG. 14. FIGS. 16A and 16B are diagrams for describing an operation of FIG. 15. The descriptions repeated with or overlapping with descriptions of FIGS. 10, 11A and 11B will be omitted in the interest of brevity.

Referring to FIGS. 1, 15, 16A and 16B, operations S213, S223 and S233 may be substantially the same as those described with reference to FIG. 10.

In operation S300, the power budget of the storage system may be compares with the total power consumption of the plurality of storage devices SD1, SD2, SD3 and SD4 when the second storage device SD2 enters the third power state PS1 as illustrated in FIG. 11B (operation S331).

When it is expected that the total power consumption exceeds the power budget (operation S331: YES), it may be determined that a problem will occur on the operation of the entire storage system if the second storage device SD2 enters the third power state PS1, and thus the second storage device SD2 may maintain the first power state PS4 without changing the power state (operation S431). For example, the execution of the second internal event may be delayed or postponed.

In some example embodiments, when it is expected that the total power consumption exceeds the power budget, the host device HD may not generate and output the second power state setting signal, as illustrated in FIG. 16A. In this example, since the second storage device SD2 does not receive the second power state setting signal, the second storage device SD2 may maintain the first power state PS4 without changing the power state.

In other example embodiments, when it is expected that the total power consumption exceeds the power budget, the host device HD may generate and output the second power state setting signal PS_SET2b having the power state value PVNM, which represents the normal state and/or the first power state PS4. In this example, the second storage device SD2 may maintain the first power state PS4 based on the second power state setting signal PS_SET2b having the power state value PVNM, without changing the power state.

In some example embodiments, after operation S431, when the first storage device SD1 enters the first power state PS4 again as described with reference to FIGS. 13A and 13B, e.g., when it is expected that the total power consumption does not exceed the power budget even if the second storage device SD2 enters the third power state PS1, the second internal event, the execution of which was delayed or postponed, may be performed.

When it is expected that the total power consumption does not exceed the power budget (operation S331: NO), operations S333 and S433 may be performed. For example, operations S333 and S433 may be substantially the same as operations S313 and S413, respectively, described with reference to FIG. 10.

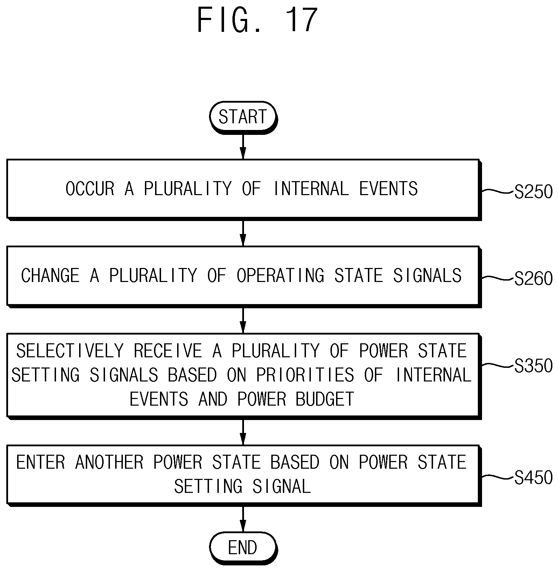

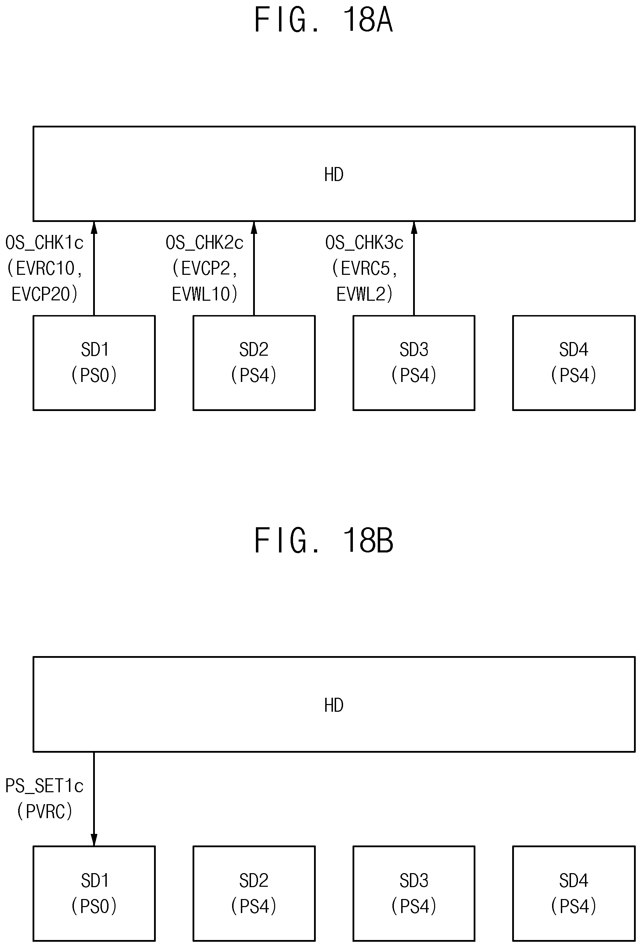

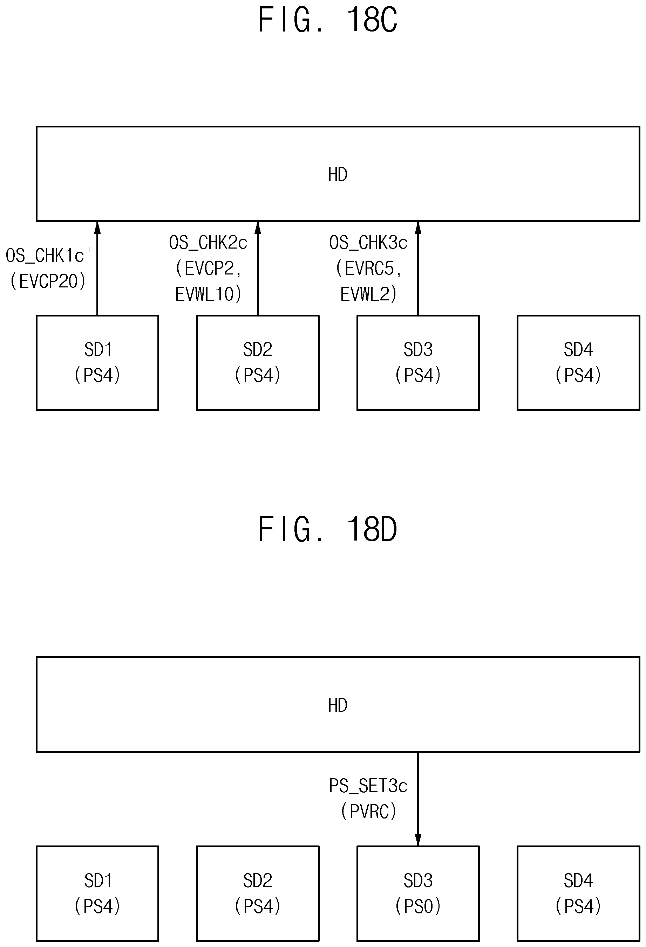

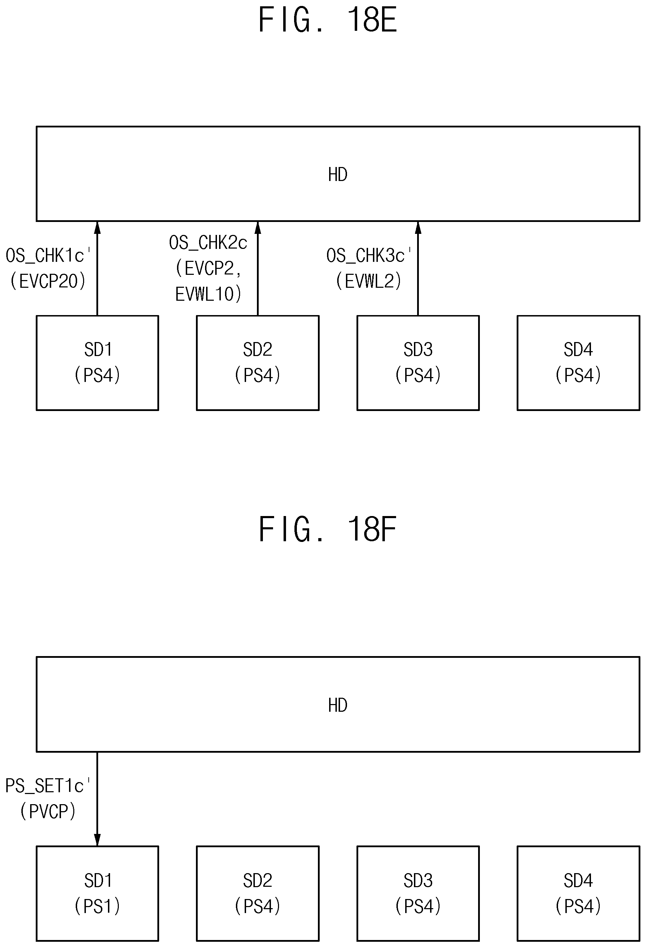

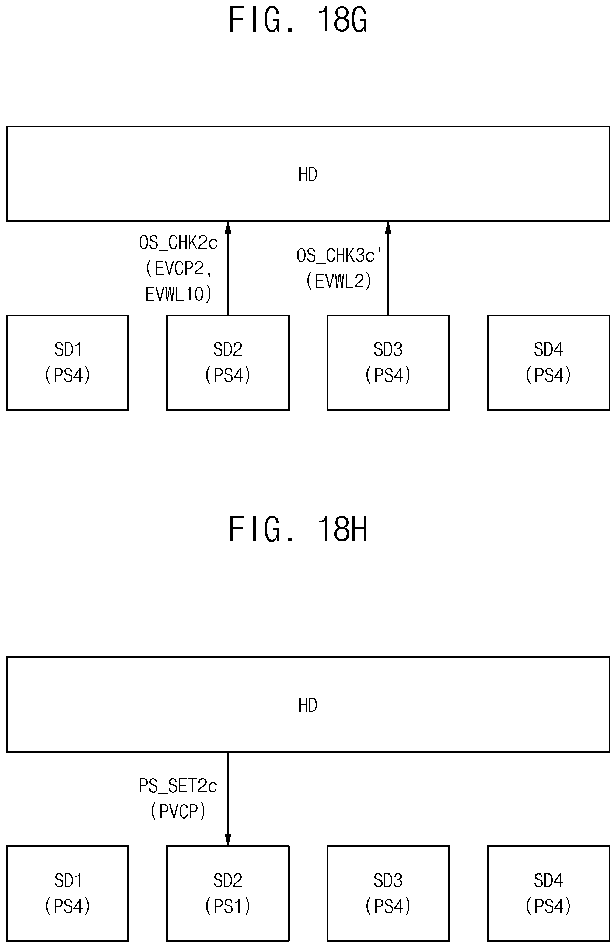

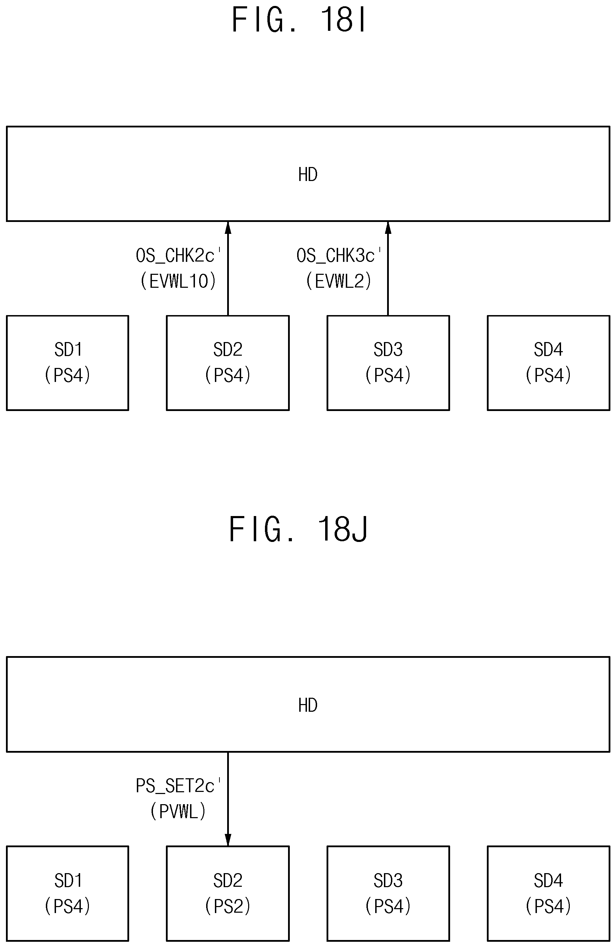

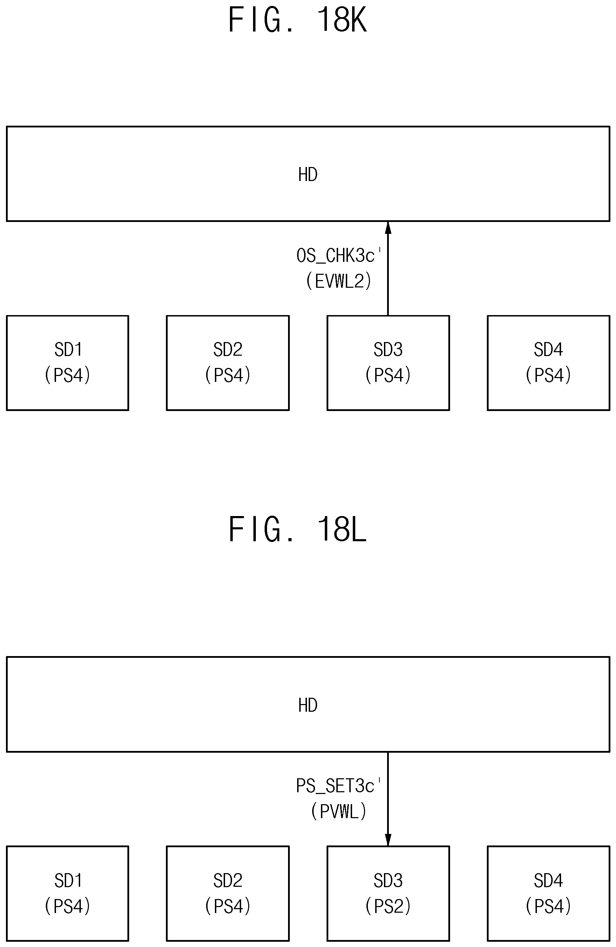

FIG. 17 is a flowchart illustrating an example of outputting a plurality of operating state signals, an example of receiving a power state setting signal and an example of changing a first power state in FIG. 1. FIGS. 18A, 18B, 18C, 18D, 18E, 18F, 18G, 18H, 18I, 18J, 18K and 18L are diagrams for describing an operation of FIG. 17.

Referring to FIGS. 1 and 17, in operation S200, while the plurality of storage devices are operating in the first power state, the plurality of internal events may occur on some or all of the plurality of storage devices (operation S250). Some or all of the plurality of storage devices may change some or all of the plurality of operating state signals to notify the occurrence of the plurality of internal events (operation S260), and may output the changed operating state signals. For example, operations S250 and S260 may be similar to operations S210, S220, and S230 in FIG. 7.

In operation S300, some or all of the plurality of storage devices may receive some or all of the plurality of power state setting signals based on the priorities of the plurality of internal events and the power budget of the storage system (operation S350). For example, operation S350 may be similar to operation S310 in FIG. 7 and/or operation S330 in FIG. 14.

In operation S400, some or all of the plurality of storage devices may enter the power state different from the first power state based on some or all of the plurality of power state setting signals (operation S450). For example, operation S450 may be similar to operation S410 in FIG. 7, operation S420 in FIG. 12 and/or operation S430 in FIG. 14.

Referring to FIGS. 18A, 18B, 18C, 18D, 18E, 18F, 18G, 18H, 18I, 18J, 18K and 18L, an example where the plurality of internal events occur on the first, second and third storage devices SD1, SD2 and SD3 and where a power budget of only one storage device is changed at a time depending on the power budget is illustrated.

As illustrated in FIG. 18A, when a plurality of first internal events occur on the first storage device SD1, the first storage device SD1 may output the first operating state signal OS_CHK1c having operating state values EVRC10 and EVCP20. For example, the plurality of first internal events may include ten periodic reclaim operations and twenty compaction operations.

Similarly, when a plurality of second internal events occur on the second storage device SD2, the second storage device SD2 may output the second operating state signal OS_CHK2c having operating state values EVCP2 and EVWL10. When a plurality of third internal events occur on the third storage device SD3, the third storage device SD3 may output a third operating state signal OS_CHK3c having operating state values EVRC5 and EVWL2. For example, the plurality of second internal events may include two compaction operations and ten wear-leveling operations, and the plurality of third internal events may include five periodic reclaim operations and two wear-leveling operations.

In this example, the periodic reclaim operation, the compaction operation and the wear leveling operation may be performed in an order of the predetermined priorities as described above. In addition, a greater number of operations may be performed first for the same operation. For example, although both the first and third storage devices SD1 and SD3 perform the periodic reclaim operations, the number (e.g., ten) of periodic reclaim operations of the first storage device SD1 may be greater than the number (e.g., five) of periodic reclaim operations of the third storage device SD3, so the periodic reclaim operations of the first storage device SD1 may be performed first.

Therefore, it may be scheduled that ten periodic reclaim operations of the first storage device SD1 are performed first. For example, as illustrated in FIG. 18B, the first storage device SD1 may receive a first power state setting signal PS_SET1c having the power state value PVRC, may enter the second power state PS0 based on the first power state setting signal PS_SET1c, and may perform ten periodic reclaim operations among the plurality of first internal events. When ten periodic reclaim operations are completed, the first storage device SD1 may enter the first power state PS4 again.

Thereafter, as illustrated in FIG. 18C, the first storage device SD1 may update and output a first operating state signal OS_CHK1c' to have the operating state value EVCP20. For example, since ten periodic reclaim operations are completed, the plurality of first internal events may include only twenty compaction operations. The second and third operating state signals OS_CHK2c and OS_CHK3c may be substantially the same as those described with reference to FIG. 18A.

Therefore, it may be scheduled that five periodic reclaim operations of the third storage device SD3 are performed first. For example, as illustrated in FIG. 18D, the third storage device SD3 may receive a third power state setting signal PS_SET3c having the power state value PVRC, may enter the second power state PS0 based on the third power state setting signal PS_SET3c, and may perform five periodic reclaim operations. When five periodic reclaim operations are completed, the third storage device SD3 may enter the first power state PS4 again.

Thereafter, as illustrated in FIG. 18E, the third storage device SD3 may update and output a third operating state signal OS_CHK3c' to have the operating state value EVWL2. For example, since five periodic reclaim operations are completed, the plurality of third internal events may include only two wear-leveling operations. The first and second operating state signals OS_CHK1c' and OS_CHK2c may be substantially the same as those described with reference to FIG. 18C.

Therefore, it may be scheduled that twenty compaction operations of the first storage device SD1 are performed first. For example, as illustrated in FIG. 18F, the first storage device SD1 may receive a first power state setting signal PS_SET1c' having the power state value PVCP, may enter the third power state PS3 based on the first power state setting signal PS_SET1c', and may perform twenty compaction operations. When twenty compaction operations are completed, the first storage device SD1 may enter the first power state PS4 again.

Thereafter, as illustrated in FIG. 18G, since all first internal operations of the first storage device SD1 are completed, the first storage device SD1 may not output the first operating state signal.

Therefore, it may be scheduled that two compaction operations of the second storage device SD2 are performed first. For example, as illustrated in FIG. 18H, the second storage device SD2 may receive a second power state setting signal PS_SET2c having the power state value PVCP, may enter the third power state PS3 based on the second power state setting signal PS_SET2c, and may perform two compaction operations. When two compaction operations are completed, the second storage device SD2 may enter the first power state PS4 again.

Thereafter, as illustrated in FIG. 18I, the second storage device SD2 may update and output a second operating state signal OS_CHK2c' to have the operating state value EVWL10. For example, since two compaction operations are completed, the plurality of second internal events may include only ten wear-leveling operations. The third operating state signal OS_CHK3c' may be substantially the same as that described with reference to FIG. 18G.

Therefore, it may be scheduled that ten wear-leveling operations of the second storage device SD2 are performed first. For example, as illustrated in FIG. 18J, the second storage device SD2 may receive a second power state setting signal PS_SET2c' having a power state value PVWL, may enter a fourth power state PS2 based on the second power state setting signal PS_SET2c', and may perform ten wear-leveling operations. When ten wear-leveling operations are completed, the second storage device SD2 may enter the first power state PS4 again.

Thereafter, as illustrated in FIG. 18K, since all second internal operations of the second storage device SD2 are completed, the second storage device SD2 may not output the second operating state signal.

Finally, it may be scheduled that two wear-leveling operations of the third storage device SD3 are performed. For example, as illustrated in FIG. 18L, the third storage device SD3 may receive a third power state setting signal PS_SET3c' having the power state value PVWL, may enter the fourth power state PS2 based on the third power state setting signal PS_SET3c', and may perform two wear-leveling operations. When two wear-leveling operations are completed, the third storage device SD3 may enter the first power state PS4.

As described above, based on the priorities of the internal events and the power budget, ten periodic reclaim operations of the first storage device SD1 may be performed first, and then five periodic reclaim operations of the third storage device SD3 may be performed, and then twenty compaction operations of the first storage device SD1 may be performed, and then two compaction operations of the second storage device SD2 may be performed, and then ten wear-leveling operations of the second storage device SD2 may be performed, and then two wear-leveling operations of the third storage device SD3 may be performed.

FIG. 19 is a flowchart illustrating an example of outputting a plurality of operating state signals, an example of receiving a power state setting signal and an example of changing a first power state in FIG. 1.

Referring to FIGS. 1 and 19, in operation S200, while each storage device is operating in the first power state, it may be checked or determined whether a specific external event among the plurality of external events occurs (or has occurred) on each storage device (operation S270).

In some example embodiments, the plurality of external events may include the operation of outputting the signal from the plurality of storage devices to the external device. For example, the plurality of external events may include the rebuilding operation for the replacement of each storage device in the event of failure and/or malfunction in each storage device, the SPO situation in which the storage system is suddenly powered off while the storage system is operating, etc.

When the specific external event does not occur (operation S270: NO), each storage device may wait while maintaining the first power state (operation S280). When the specific external event occurs (operation S270: YES), each storage device may selectively change and output each operating state signal (operation S290).

In operation S300, each storage device may selectively receive each power state setting signal (operation S370). In operation S400, each storage device may exit the first power state and may enter a power state different from the first power state (operation S470).

In some example embodiments, each storage device may enter the power state different from the first power state based on each operating state signal and each power state setting signal. In other example embodiments, each storage device may immediately enter the power state different from the first power state without each operating state signal and each power state setting signal.

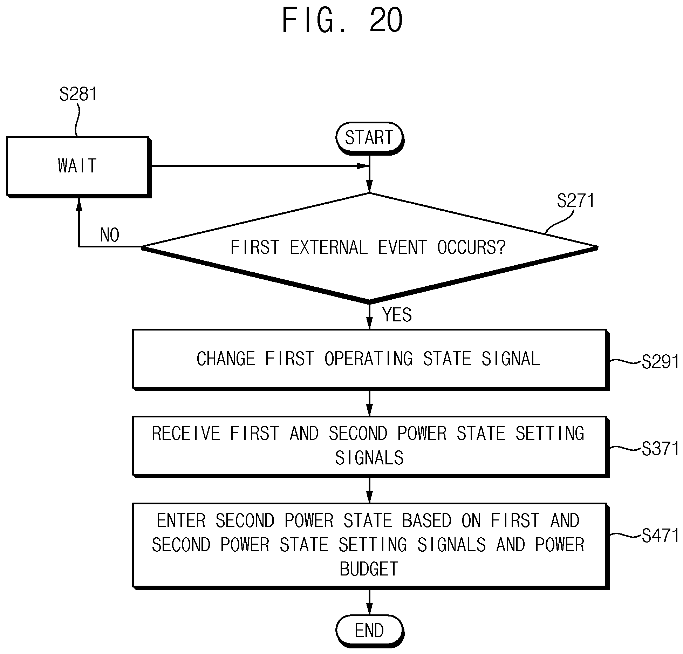

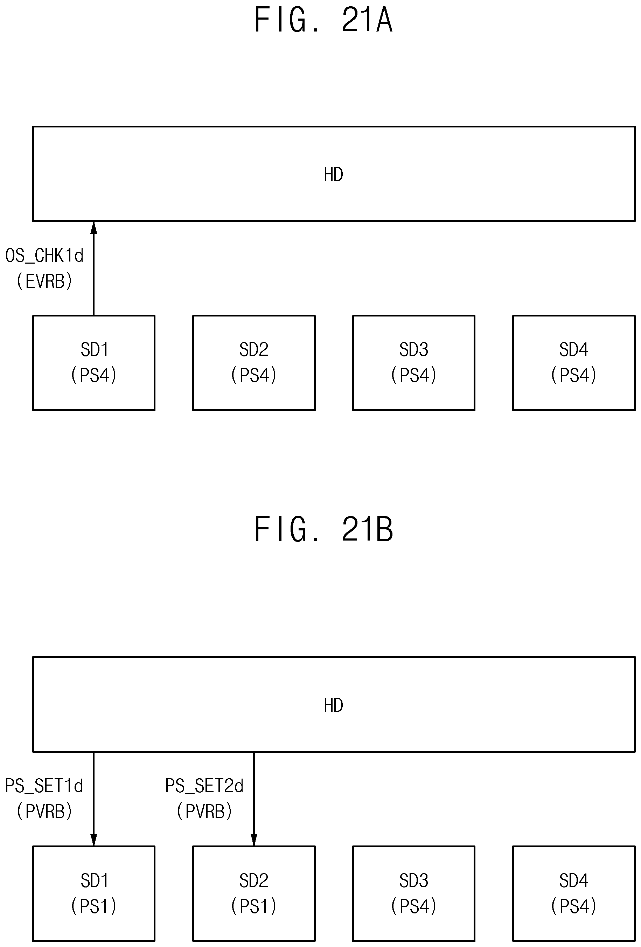

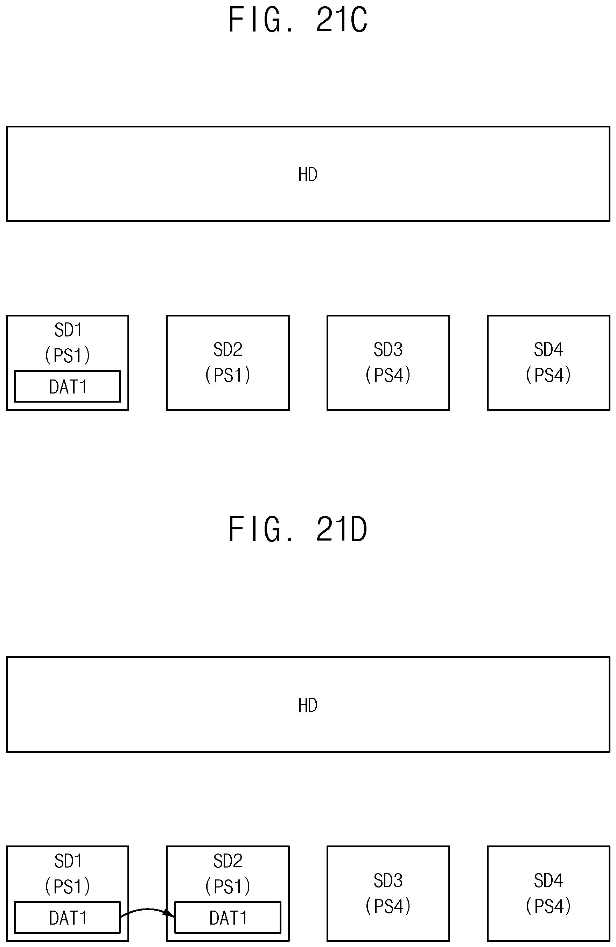

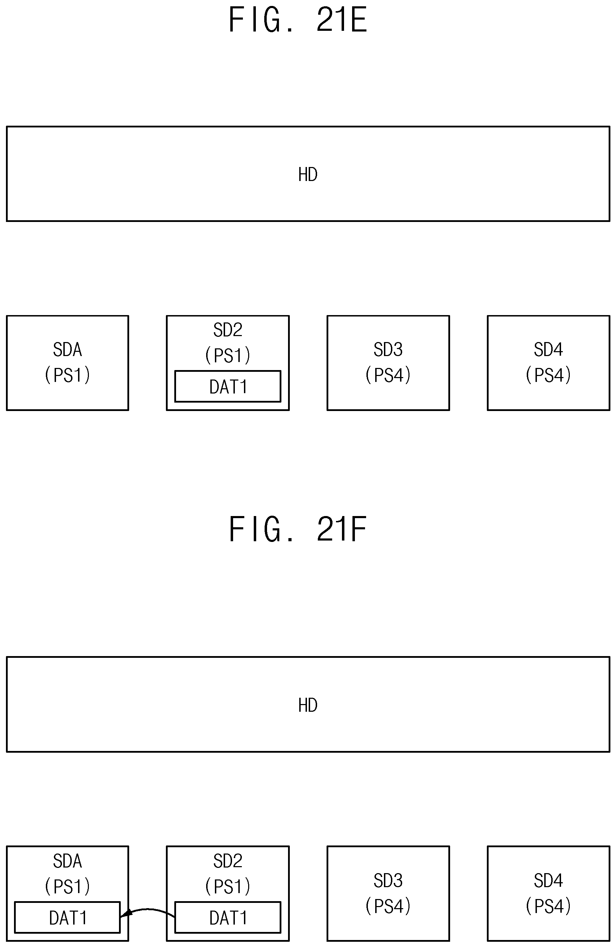

FIG. 20 is a flowchart illustrating an example of an operation of FIG. 19. FIGS. 21A, 21B, 21C, 21D, 21E and 21F are diagrams for describing an operation of FIG. 20.

Referring to FIGS. 1, 20, 21A, 21B, 21C, 21D, 21E and 21F, an example of one host device HD and four storage devices SD1, SD2, SD3 and SD4 controlled by the host device HD is illustrated.

In operation S200, as illustrated in FIG. 21A, when a first external event requiring a replacement of the first storage device SD1 occurs (operation S271: YES), the first storage device SD1 may change and output a first operating state signal OS_CHK1d to have an operating state value EVRB (operation S291), and the host device HD may receive the first operation signal OS_CHK1d having the operating state value EVRB. For example, the first external event may be the rebuilding operation, and the operating state value EVRB may represent the rebuilding operation.

In operation S300, as illustrated in FIG. 21B, the host device HD may generate and output first and second power state setting signals PS_SET1d and PS_SET2d having a power state value PVRB based on the first operating state signal OS_CHK1d having the operating state value EVRB, and the first and second storage devices SD1 and SD2 may receive the first and second power state setting signals PS_SET1d and PS_SET2d having the power state value PVRB, respectively (operation S371). For example, a spare storage device that temporarily stores data stored in a target storage device to be replaced may be needed for the rebuilding operation, and thus the power state setting signals may be provided to both the target storage device and the spare storage device. For example, a spare storage device for a specific storage device may be determined in advance during the manufacturing process of the storage system. For example, the power state value PVRB may represent the power state needed for the rebuilding operation, and may be determined so as not to exceed the power budget.

In operation S400, as illustrated in FIG. 21B, the first and second storage devices SD1 and SD2 may enter a second power state PS1 in which the first and second storage devices SD1 and SD2 operate with power consumption greater than that of the first power state PS4 and within the power budget, based on the first and second power state setting signals PS_SET1d and PS_SET2d having the power state value PVRB (operation S471).

Thereafter, in operation S400, as illustrated in FIGS. 21C, 21D, 21E and 21F, a replacement operation may be performed on the first storage device SD1 using the second storage device SD2. For example, all of data DAT1 stored in the first storage device SD1 may be copied to the second storage device SD2, the first storage device SD1 may be replaced with a normal storage device SDA without a failure and/or defect, and the data DAT1 stored in the second storage device SD2 may be copied to the replaced storage device SDA. For example, after the copy operation, the data DAT1 of the second storage device SD2 may be erased.

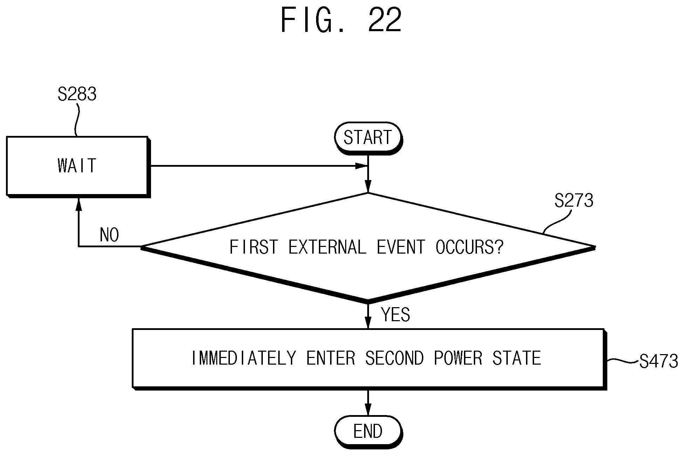

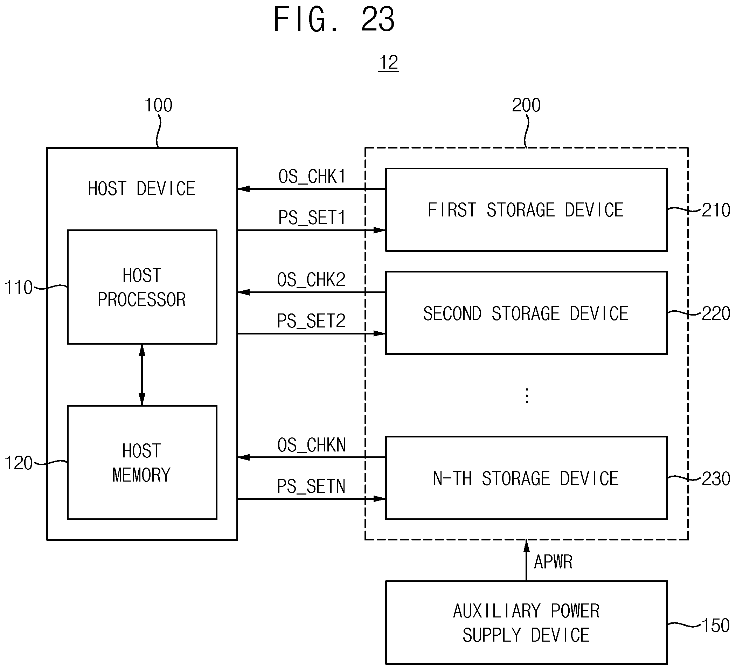

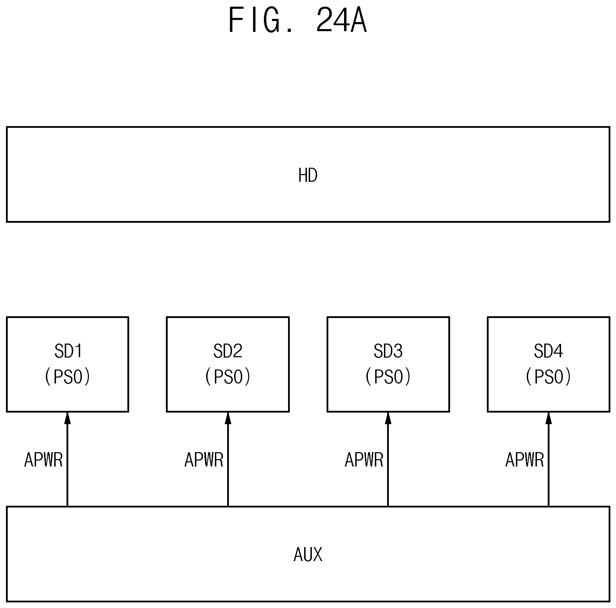

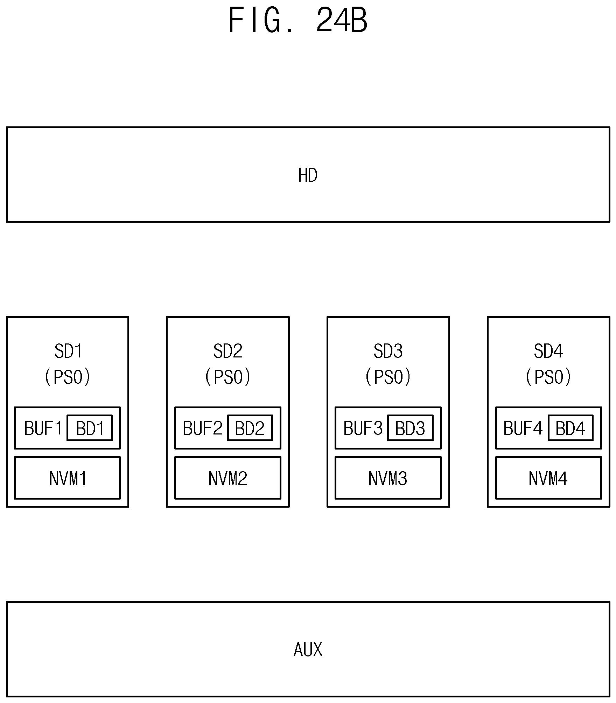

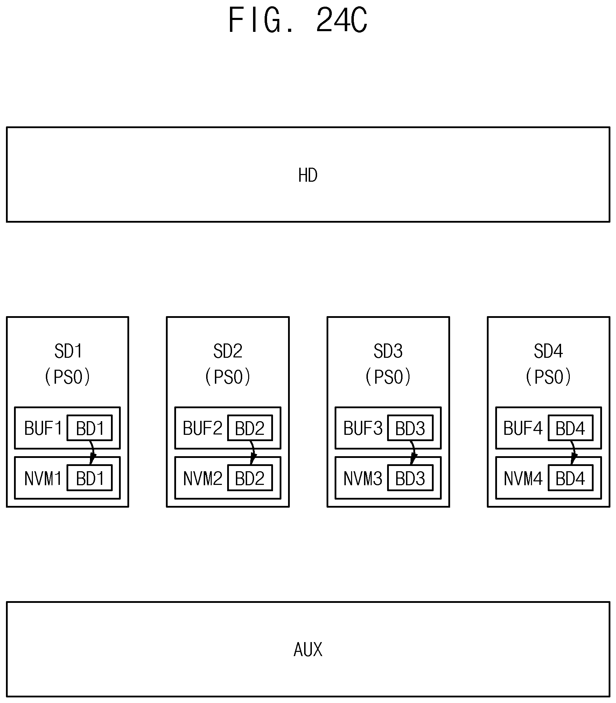

FIG. 22 is a flowchart illustrating an example of an operation of FIG. 19. FIG. 23 is a block diagram illustrating a storage system according to example embodiments. FIGS. 24A, 24B and 24C are diagrams for describing an operation of FIG. 22.

Referring to FIGS. 1 and 22, when a second external event in which the storage system is suddenly powered off occurs (operation S273: YES), all of the plurality of storage devices may enter a second power state in which power consumption of the plurality of storage devices are greater than or equal to the reference power consumption (operation S473). For example, the second external event may represent the SPO situation. For example, all of the plurality of storage devices may immediately enter the second power state, without changing and outputting the operating state signals and without receiving the power state setting signals. When the second external event does not occur (operation S273: NO), the plurality of storage devices may wait while maintaining the first power state PS4 (operation S283).

Referring to FIG. 23, a storage system 12 may be substantially the same as the storage system 10 of FIG. 2, except that the storage system 12 further includes an auxiliary power supply device 150.

The auxiliary power supply device 150 may be located outside of or external to the plurality of storage devices 200, and may supply auxiliary power APWR to the plurality of storage devices 200. In this example, the plurality of storage devices 200 may not include the auxiliary power supply device.

When the SPO situation occurs, each storage device may operate based on the auxiliary power or auxiliary power voltage provided from the auxiliary power supply device, and a reset operation and/or a flush operation may be performed on each storage device such that the operation of each storage device is normally terminated before the supply of the auxiliary power is blocked. The auxiliary power supply device may be referred to as a power-loss protection (PLP) device. The storage system 12 may not include the PLP device at the device level, and may include the PLP device at the system level.

Referring to FIGS. 24A, 24B and 24C, an example of one host device HD and one auxiliary power supply device AUX, and four storage devices SD1, SD2, SD3 and SD4 controlled by the host device HD and the auxiliary power supply device AUX is illustrated.

As illustrated in FIG. 24A, when the second external event occurs, all of the storage devices SD1, SD2, SD3 and SD4 may immediately enter a second power state PS0 based on the auxiliary power APWR provided from the auxiliary power supply device AUX. For example, the power state may be changed such that the storage devices SD1, SD2, SD3 and SD4 operate with the largest power consumption.

Thereafter, as illustrated in FIGS. 24B and 24C, the flush operation may be performed on all of the storage devices SD1, SD2, SD3 and SD4. For example, as with that described with reference to FIG. 4, the storage devices SD1, SD2, SD3 and SD4 may include buffer memories BUF1, BUF2, BUF3 and BUF4 and nonvolatile memories NVM1, NVM2, NVM3 and NVM4, respectively, and data BD1, BD2, BD3 and BD4 stored in the buffer memories BUF1, BUF2, BUF3 and BUF4 may be copied to the nonvolatile memories NVM1, NVM2, NVM3 and NVM4, respectively.

Although the operations associated with or related to the internal events are described with reference to FIGS. 7 through 18L, and the operations associated with or related to the external events are described with reference to FIGS. 19 through 24C, example embodiments are not limited thereto, and the power consumption may be reduced while improving the operating performance with respect to various other events.

FIG. 25 is a flowchart illustrating a method of operating a storage system according to example embodiments. The descriptions repeated with or overlapping with descriptions of FIG. 1 will be omitted in the interest of brevity.

Referring to FIG. 25, in a method of operating a storage system according to example embodiments, operation S100 may be substantially the same as that described with reference to FIG. 1.

The plurality of storage devices transmit the plurality of operating state signals to the host device (operation S200a), and the host device monitors the operating states of the plurality of storage devices based on the plurality of operating states signals (operation S200b). Operation S200a and S200b may be substantially the same as operation S200 in FIG. 1. For example, when each operating state signal is generated and output periodically, the host device may perform the monitoring operation periodically. For example, when each operating state signal is generated and output only when a specific event occurs, the host device may perform the monitoring operation only when the specific event occurs.

When the power consumption increasing event occurs on at least one of the plurality of storage devices and when at least one of the plurality of operating state signals is changed, the host device transmits the power status setting signal to at least one of the plurality of storage devices (operation S300a). Based on the power state setting signal, the first power state of at least one of the plurality of storage devices is changed such that the power consumption of at least one of the plurality of storage devices is greater than or equal to the reference power consumption (operation S400).

For example, when the power consumption increasing event occurs on the first storage device and when the first operating state signal is changed, the host device may transmit the first power state setting signal having a first value to the first storage device based on the power budget of the storage system, and the first storage device may enter the second power state in which power consumption of the first storage device is greater than or equal to the reference power consumption based on the first power state setting signal having the first value and may perform the power consumption increasing event. When the power consumption increasing event on the first storage device is completed and when the first operating state signal is changed again, the host device may transmit the first power state setting signal having a second value different from the first value to the first storage device, and the first storage device may enter the first power state again based on the first power state setting signal having the second value.

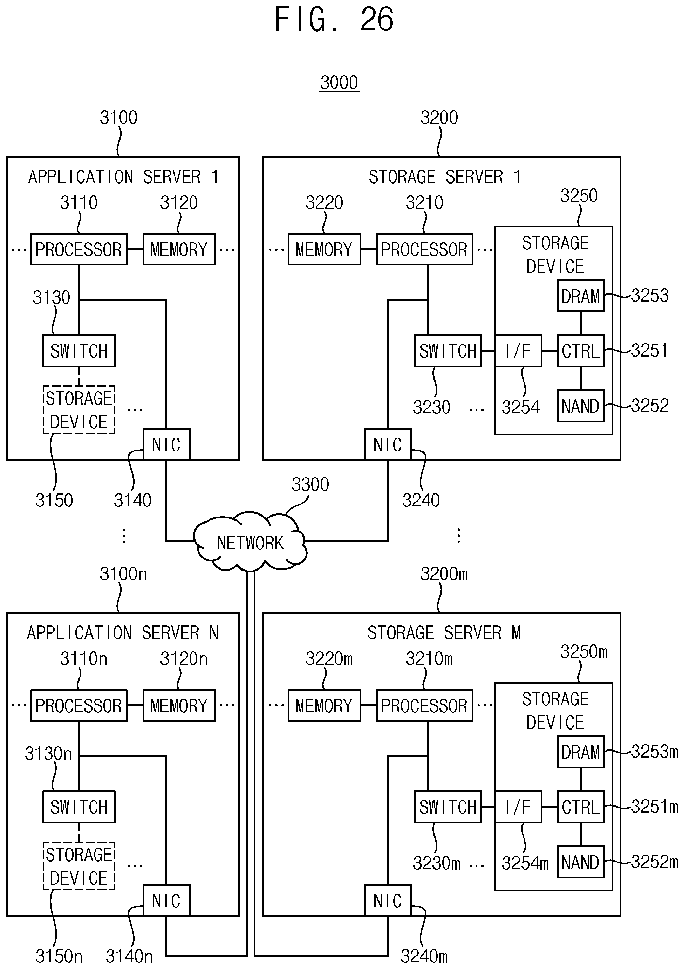

FIG. 26 is a block diagram illustrating a data center including a storage system according to example embodiments.

Referring to FIG. 26, a data center 3000 may be a facility that collects various types of data and provides various services, and may be referred to as a data storage center. The data center 3000 may be a system for operating search engines and databases, and may be a computing system used by companies such as banks or government agencies. The data center 3000 may include application servers 3100 to 3100n and storage servers 3200 to 3200m. The number of the application servers 3100 to 3100n and the number of the storage servers 3200 to 3200m may be variously selected according to example embodiments, and the number of the application servers 3100 to 3100n and the number of the storage servers 3200 to 3200m may be different from each other.

The application server 3100 may include at least one processor 3110 and at least one memory 3120, and the storage server 3200 may include at least one processor 3210 and at least one memory 3220. An operation of the storage server 3200 will be described as an example. The processor 3210 may control overall operations of the storage server 3200, and may access the memory 3220 to execute instructions and/or data loaded in the memory 3220. The memory 3220 may include at least one of a double data rate (DDR) synchronous dynamic random access memory (SDRAM), a high bandwidth memory (HBM), a hybrid memory cube (HMC), a dual in-line memory module (DIMM), an Optane DIMM, a nonvolatile DIMM (NVDIMM), etc. The number of the processors 3210 and the number of the memories 3220 included in the storage server 3200 may be variously selected according to example embodiments. In some example embodiments, the processor 3210 and the memory 3220 may provide a processor-memory pair. In some example embodiments, the number of the processors 3210 and the number of the memories 3220 may be different from each other. The processor 3210 may include a single core processor or a multiple core processor. The above description of the storage server 3200 may be similarly applied to the application server 3100. The application server 3100 may include at least one storage device 3150, and the storage server 3200 may include at least one storage device 3250. In some example embodiments, the application server 3100 may not include the storage device 3150. The number of the storage devices 3250 included in the storage server 3200 may be variously selected according to example embodiments.

The application servers 3100 to 3100n and the storage servers 3200 to 3200m may communicate with each other through a network 3300. The network 3300 may be implemented using a fiber channel (FC) or an Ethernet or other media. The FC may be a medium used for a relatively high speed data transmission, and an optical switch that provides high performance and/or high availability may be used. The storage servers 3200 to 3200m may be provided as file storages, block storages or object storages according to an access scheme of the network 3300.

In some example embodiments, the network 3300 may be a storage-only network or a network dedicated to a storage such as a storage area network (SAN). For example, the SAN may be an FC-SAN that uses an FC network and is implemented according to an FC protocol (FCP). For another example, the SAN may be an IP-SAN that uses a transmission control protocol/internet protocol (TCP/IP) network and is implemented according to an iSCSI (a SCSI over TCP/IP or an Internet SCSI) protocol. In other example embodiments, the network 3300 may be a general or normal network such as the TCP/IP network. For example, the network 3300 may be implemented according to at least one of protocols such as an FC over Ethernet (FCoE), a network attached storage (NAS), a nonvolatile memory express (NVMe) over Fabrics (NVMe-oF), etc.

Hereinafter, example embodiments will be described based on the application server 3100 and the storage server 3200. The description of the application server 3100 may be applied to the other application server 3100n, and the description of the storage server 3200 may be applied to the other storage server 3200m.

The application server 3100 may store data requested to be stored by a user or a client into one of the storage servers 3200 to 3200m through the network 3300. In addition, the application server 3100 may obtain data requested to be read by the user or the client from one of the storage servers 3200 to 3200m through the network 3300. For example, the application server 3100 may be implemented as a web server or a database management system (DBMS).

The application server 3100 may access a memory 3120n or a storage device 3150n included in the other application server 3100n through the network 3300, and/or may access the memories 3220 to 3220m or the storage devices 3250 to 3250m included in the storage servers 3200 to 3200m through the network 3300. Thus, the application server 3100 may perform various operations on data stored in the application servers 3100 to 3100n and/or the storage servers 3200 to 3200m. For example, the application server 3100 may execute a command for moving or copying data between the application servers 3100 to 3100n and/or the storage servers 3200 to 3200m. The data may be transferred from the storage devices 3250 to 3250m of the storage servers 3200 to 3200m to the memories 3120 to 3120n of the application servers 3100 to 3100n directly or through the memories 3220 to 3220m of the storage servers 3200 to 3200m. For example, the data transferred through the network 3300 may be encrypted data for security or privacy.

In the storage server 3200, an interface 3254 may provide a physical connection between the processor 3210 and a controller 3251 and/or a physical connection between a network interface card (NIC) 3240 and the controller 3251. For example, the interface 3254 may be implemented based on a direct attached storage (DAS) scheme in which the storage device 3250 is directly connected with a dedicated cable. For example, the interface 3254 may be implemented based on at least one of various interface schemes such as an advanced technology attachment (ATA), a serial ATA (SATA) an external SATA (e-SATA), a small computer system interface (SCSI), a serial attached SCSI (SAS), a peripheral component interconnection (PCI), a PCI express (PCIe), an NVMe, a compute express link (CXL), an IEEE 1394, a universal serial bus (USB), a secure digital (SD) card interface, a multi-media card (MMC) interface, an embedded MMC (eMMC) interface, a universal flash storage (UFS) interface, an embedded UFS (eUFS) interface, a compact flash (CF) card interface, etc.

The storage server 3200 may further include a switch 3230 and the NIC 3240. The switch 3230 may selectively connect the processor 3210 with the storage device 3250 or may selectively connect the NIC 3240 with the storage device 3250 under a control of the processor 3210. Similarly, the application server 3100 may further include a switch 3130 and an NIC 3140.

In some example embodiments, the NIC 3240 may include a network interface card, a network adapter, or the like. The NIC 3240 may be connected to the network 3300 through a wired interface, a wireless interface, a Bluetooth interface, an optical interface, or the like. The NIC 3240 may further include an internal memory, a digital signal processor (DSP), a host bus interface, or the like, and may be connected to the processor 3210 and/or the switch 3230 through the host bus interface. The host bus interface may be implemented as one of the above-described examples of the interface 3254. In some example embodiments, the NIC 3240 may be integrated with at least one of the processor 3210, the switch 3230 and the storage device 3250.

In the storage servers 3200 to 3200m and/or the application servers 3100 to 3100n, the processor may transmit a command to the storage devices 3150 to 3150n and 3250 to 3250m or the memories 3120 to 3120n and 3220 to 3220m to program or read data. For example, the data may be error-corrected data by an error correction code (ECC) engine. For example, the data may be processed by a data bus inversion (DBI) or a data masking (DM), and may include a cyclic redundancy code (CRC) information. For example, the data may be encrypted data for security or privacy.

The storage devices 3150 to 3150m and 3250 to 3250m may transmit a control signal and command/address signals to NAND flash memory devices 3252 to 3252m in response to a read command received from the processor. When data is read from the NAND flash memory devices 3252 to 3252m, a read enable (RE) signal may be input as a data output control signal and may serve to output data to a DQ bus. A data strobe signal (DQS) may be generated using the RE signal. The command and address signals may be latched in a page buffer based on a rising edge or a falling edge of a write enable (WE) signal.

The controller 3251 may control overall operations of the storage device 3250. In some example embodiments, the controller 3251 may include a static random access memory (SRAM). The controller 3251 may write data into the NAND flash memory device 3252 in response to a write command, or may read data from the NAND flash memory device 3252 in response to a read command. For example, the write command and/or the read command may be provided from the processor 3210 in the storage server 3200, the processor 3210m in the other storage server 3200m, or the processors 3110 to 3110n in the application servers 3100 to 3100n. A DRAM 3253 may temporarily store (e.g., may buffer) data to be written to the NAND flash memory device 3252 or data read from the NAND flash memory device 3252. Further, the DRAM 3253 may store meta data. The meta data may be data generated by the controller 3251 to manage user data or the NAND flash memory device 3252.

Each of the storage devices 3250 to 3250m may be included in the storage system according to example embodiments, and may operate based on the method of operating the storage system according to example embodiments.

The example embodiments may be applied to various electronic devices and systems that include the storage devices and the storage systems. The example embodiments may be applied to systems such as a personal computer (PC), a server computer, a data center, a workstation, a mobile phone, a smart phone, a tablet computer, a laptop computer, a personal digital assistant (PDA), a portable multimedia player (PMP), a digital camera, a portable game console, a music player, a camcorder, a video player, a navigation device, a wearable device, an internet of things (IoT) device, an internet of everything (IoE) device, an e-book reader, a virtual reality (VR) device, an augmented reality (AR) device, a robotic device, a drone, an automotive, etc.

The foregoing is illustrative of example embodiments and is not to be construed as limiting thereof. Although some example embodiments have been described, those skilled in the art will readily appreciate that many modifications are possible in the example embodiments without materially departing from the novel teachings and advantages of the example embodiments. Accordingly, all such modifications are intended to be included within the scope of the example embodiments as defined in the claims. Therefore, it is to be understood that the foregoing is illustrative of various example embodiments and is not to be construed as limited to the specific example embodiments disclosed, and that modifications to the disclosed example embodiments, as well as other example embodiments, are intended to be included within the scope of the appended claims.

## Claims

1. A method of operating a storage system including a plurality of storage devices, the method comprising:
entering, by the plurality of storage devices, a first power state in which respective power consumptions of the plurality of storage devices are less than a reference power consumption;
outputting, by the plurality of storage devices, a plurality of operating state signals representing operating states of the plurality of storage devices;
when a power consumption increasing event occurs on at least one of the plurality of storage devices and when at least one of the plurality of operating state signals is changed, receiving, by at least one of the plurality of storage devices, a power state setting signal; and
based on the power state setting signal, changing the first power state of at least one of the plurality of storage devices such that the respective power consumptions of at least one of the plurality of storage devices is greater than or equal to the reference power consumption.

2. The method of claim 1, wherein the power consumption increasing event comprises a plurality of internal events that are internally performed in the plurality of storage devices.

3. The method of claim 2, wherein receiving the power state setting signal comprises:
when a first internal event of the plurality of internal events for internal data copying occurs on a first storage device among the plurality of storage devices and when a first operating state signal among the plurality of operating state signals is changed, receiving, by the first storage device, a first power state setting signal.

4. The method of claim 3, wherein changing the first power state comprises:
based on the first power state setting signal, entering, by the first storage device, a second power state in which a power consumption of the first storage device is greater than or equal to the reference power consumption.

5. The method of claim 4, wherein receiving the power state setting signal further comprises:
when a second internal event of the plurality of internal events for internal data copying occurs on a second storage device among the plurality of storage devices different from the first storage device and when a second operating state signal among the plurality of operating state signals is changed, receiving, by the second storage device, a second power state setting signal, wherein the second internal event is different from the first internal event.

6. The method of claim 5, wherein changing the first power state further comprises:
based on the second power state setting signal, entering, by the second storage device, a third power state in which a power consumption of the second storage device is greater than or equal to the reference power consumption, wherein the third power state is different from the second internal event.

7. The method of claim 6, wherein, when the first internal event has a priority higher than that of the second internal event, the power consumption of the first storage device having the second power state is greater than the power consumption of the second storage device having the third power state.

8. The method of claim 5, further comprising:
comparing a power budget of the storage system with a total power consumption of the plurality of storage devices, and
wherein, when the total power consumption is expected to exceed the power budget, the second storage device maintains the first power state.

9. The method of claim 4, wherein, when the first internal event of the first storage device is completed, the first operating state signal is changed again, the first power state setting signal is received again, and the first storage device enters the first power state again.

10. The method of claim 2, wherein receiving the power state setting signal comprises:
when a plurality of first and second internal events of the plurality of internal events for internal data copying occur on first and second storage devices among the plurality of storage devices and when first and second operating state signals among the plurality of operating state signals are changed, selectively receiving, by the first and second storage devices, first and second power state setting signals based on priorities of the plurality of first and second internal events and power budget of the storage system.

11. The method of claim 1, wherein the power consumption increasing event comprises a plurality of external events that are performed including an operation of outputting respective signals from the plurality of storage devices to an external device.

12. The method of claim 11, wherein receiving the power state setting signal comprises:
when a first external event requiring a replacement of a first storage device among the plurality of storage devices occurs and when a first operating state signal among the plurality of operating state signals is changed, receiving, by the first storage device and a second storage device among the plurality of storage devices, a first power state setting signal and a second power state setting signal, respectively.

13. The method of claim 12, wherein changing the first power state comprises:
based on the first and second power state setting signal, entering, by the first and second storage devices, a second power state in which power consumptions of the first and second storage devices are greater than or equal to the reference power consumption.

14. The method of claim 11, wherein changing the first power state comprises:
when a second external event occurs in which the storage system is powered off, entering, by all of the plurality of storage devices, a second power state in which power consumptions of the plurality of storage devices are respectively greater than or equal to the reference power consumption.

15. A storage system comprising:
a plurality of storage devices; and
a host device configured to control operations of the plurality of storage devices,
wherein the plurality of storage devices are configured to enter a first power state in which respective power consumptions of the plurality of storage devices are less than a reference power consumption,
wherein the plurality of storage devices are configured to output a plurality of operating state signals representing operating states of the plurality of storage devices,
wherein, when a power consumption increasing event occurs on at least one of the plurality of storage devices and when at least one of the plurality of operating state signals is changed, at least one of the plurality of storage devices is configured to receive a power state setting signal, and
wherein, based on the power state setting signal, the first power state of at least one of the plurality of storage devices is changed such that the respective power consumptions of at least one of the plurality of storage devices is greater than or equal to the reference power consumption.
